(19) Europäisches Patentamt
European Patent Office
Office européen des brevets

(11) **EP 4 474 434 A1**

(12) **EUROPEAN PATENT APPLICATION**
published in accordance with Art. 153(4) EPC

(43) Date of publication:
**11.12.2024 Bulletin 2024/50**

(21) Application number: 23747142.0

(22) Date of filing: **30.01.2023**

(51) International Patent Classification (IPC):
$C09D\ 5/00^{(2006.01)}$    $C11D\ 17/08^{(2006.01)}$
$C09D\ 183/04^{(2006.01)}$    $C09D\ 201/00^{(2006.01)}$
$C11D\ 7/20^{(2006.01)}$    $C11D\ 7/26^{(2006.01)}$
$C11D\ 7/50^{(2006.01)}$    $C09D\ 7/20^{(2018.01)}$
$C09D\ 7/61^{(2018.01)}$    $C09D\ 7/63^{(2018.01)}$

(52) Cooperative Patent Classification (CPC):
**C09D 5/00; C09D 7/20; C09D 7/61; C09D 7/63;
C09D 183/04; C09D 201/00; C11D 7/20;
C11D 7/26; C11D 7/50; C11D 17/08**

(86) International application number:
**PCT/JP2023/002857**

(87) International publication number:
**WO 2023/145932 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2022 JP 2022012495**

(71) Applicant: **National Institute for Materials Science
Tsukuba-shi, Ibaraki 305-0047 (JP)**

(72) Inventors:
• **TENJIMBAYASHI Mizuki
Tsukuba-shi, Ibaraki 305-0047 (JP)**
• **HAYASE Gen
Tsukuba-shi, Ibaraki 305-0047 (JP)**

(74) Representative: **TBK
Bavariaring 4-6
80336 München (DE)**

(54) **COATING COMPOSITION, PRODUCTION METHOD THEREOF, PRODUCTION METHOD OF COATING FILM USING SAME, LUBRICATING ARTICLE KIT USING SAME, AND WASHER FLUID USING SAME**

(57) The invention provides a coating composition for forming a coating film having a lubricating surface by coating, a process of forming the same, a lubricating article kit using the same, and a washer liquid. The coating composition contains particles, a binder resin for fixedly binding the particles together, a lubricating liquid having a nonaffinity for the liquid of interest, but an affinity for the lubricating liquid, and solvent having a affinity for the lubricating liquid, wherein the lubricating liquid has a contact angle of 0° upon dropwise addition onto a substrate made of the same material as said particles as measured in the atmosphere, and a contact angle of 0° upon dropwise addition onto the substrate made of the same material as said particles as measured in said liquid of interest, a volume ratio of said lubricating liquid relative to a total amount of said solvent and said lubricating liquid ranges from 0.09 to 0.95 inclusive, and a content of said binder resin relative to the total amount of said solvent and said lubricating liquid ranges from 0.0004 g/mL to 0.05 g/mL inclusive.

EP 4 474 434 A1

## Description

### Technical Field

The present invention relates generally to a coating composition, a process of producing the same, a process of producing a coating film using the same, a lubricating article kit using the same, and a washer fluid using the same.

### Background Art

It has so far been reported that there is a surface having a reduced area of contact with droplets by way of a nanoscale fine surface structure (for example, see Patent Publication 1). If droplets are in a spherical shape of greater than about 150° in terms of an angle between the droplet and the surface (that is, a superhydrophobic surface), they will roll down the surface that tilts at about 10°.

With reference to a water-repellant coating agent forming such a fine surface structure, Patent Publication 1 discloses a water repellant coating agent containing a component (A) that is a surface-hydrophobic ultrafine particle having an average primary particle diameter of 1 $\mu$m or less, and is insoluble in a component (B), and has a hydrophilic functional group on its surface, a component (B) that is a volatile solvent comprising one or more of a hydrocarbon-based solvent and a silicone-based solvent and having a boiling point of 100°C to 360°C, and a component (C) that is a nonvolatile silicone compound that is soluble in the component (B) volatile solvent.

However, a liquid rolling surface having such an ultrafine surface structure is now found to have the following problems.

The mechanical durability is so low because of its ultrafine surface structure that the structure is likely to be broken even by rubbing with a finger, spoiling the capability of liquid droplets to roll down.

Light is scattered by the surface structure, generally leading to a decreased transmittance.

Liquid, because of having a spheric shape, gives rise to a surface tension too high to allow a liquid lower than water in terms of surface tension to roll down. This is particularly true of a low surface energy liquid such as ethanol, acetone, and fluorine solvents.

To address such problems, slippery liquid infused porous surfaces (SLIPS) have been developed as a surface that allows liquid droplets to slide down by means of a surface structure flat as viewed on a molecular level

(for instance, see Patent Publications 2 and 3). The SLIPS is formed of a surface lubricating liquid layer and a liquid-repellent porous underlayer adapted to stabilize the lubricating liquid. According to the SLIPS, a flat structure is achieved via a lubricating liquid surface with enhanced mechanical durability and transparency that are problems with liquid sliding surfaces. In addition, the SLIPS allows low surface energy liquids to slide down by selection of lubricating liquids.

### Prior Arts

### Patent Publications

Patent Publication 1: JP(A)2004-204131
Patent Publication 2: JP(A)2014-509959
Patent Publication 3: JP(A)2014-531989

### Summary of the Invention

### Subject Matter of the Invention

However, the SLIPS disclosed in Patent Publications 2 and 3 must comprise a two-step process wherein a liquid-repellent porous underlayer is formed on a substrate, and said underlayer is infused with a lubricating liquid containing an oil material, followed by removal of excessive oil material. With such situations in mind, the present invention has for its purpose to provide a coating composition capable of producing a coating film having a lubricating surface by coating without recourse to such a two-step process, a process of producing the same, a process of forming a coating film using the same, a lubricating article kit using the same, and a washer liquid using the same.

## Aspects of the Invention

The inventors have made intensive and extensive studies to provide a solution to the aforesaid prior problems, and accomplished the present invention as a result of finding that if the SLIPS is formed out of a coating liquid containing particles, a binder resin, a lubricating liquid, and a solvent, a liquid having a specific property is selectively used as the lubricating liquid contained in said coating liquid, and a volume of the lubricating liquid and a content of the binder resin are each adapted to come in a specific range, it is then possible to produce a coating film having a lubricating surface by simple application of said coating liquid on the desired article without recourse to any two-step process.

The present invention generally includes such aspects as described below.

[1] A coating composition for forming a coating film having a lubricating surface for a liquid of interest, containing:

particles,
a binder resin for fixedly binding said particles together,
a lubricating liquid that has a nonaffinity for said liquid of interest, but has an affinity for said binder resin, and
a solvent that has an affinity for said lubricating liquid,
wherein said lubricating liquid has a contact angle of 0° upon dropwise addition onto a substrate made of the same material as said particles as measured in the atmosphere, and contact angle of 0° upon dropwise addition onto the substrate made of the same material as said particles as measured in said liquid of interest,
a volume ratio of said lubricating liquid relative to a total amount of said solvent and said lubricating liquid ranges from 0.09 to 0.95 inclusive, and
a content of said binder resin relative to the total amount of said solvent and said lubricating liquid ranges from 0.0004 g/mL to 0.05 g/mL inclusive.

[2] The coordinates for the Hansen solubility parameter of said solvent may be located within a Hansen sphere with the coordinates for the Hansen solubility parameter of said solvent as center,
and the coordinates for the Hansen solubility parameter of said liquid of interest may be located outside the Hansen sphere with the coordinates for the Hansen solubility parameter of said lubricating liquid as center.

[3] A content of said particles relative to the total amount of said solvent and said lubricating liquid may range from 0.001 g/mL to 0.1 g/mL inclusive.

[4] The content of said particles relative to the total amount of said solvent and said lubricating liquid may range from 0.005 g/mL to 0.05 g/mL inclusive.

[5] A content of said binder relative to the total amount of said solvent and said lubricating liquid may range from 0.0006 g/mL to 0.03 g/mL inclusive.

[6] A volume ratio of said lubricating liquid relative to the total amount of said solvent and said lubricating liquid may range from 0.6 to 0.92 inclusive.

[7] Said particles may have a particle diameter ranging from 3 nm to 300 nm inclusive.

[8] Said particles may be composed of at least one material selected from the group consisting of an inorganic material, an organic material, or a combination thereof.

[9] Said binder resin may be composed of at least one selected from the group consisting of a silicone resin, a fluororesin, an epoxy resin, a urethane resin, an olefin resin, an acrylic resin, an ethylene-vinyl acetate copolymer (EVA), and a polyvinyl butyral resin (PVB).

[10] Said lubricating liquid may be at least one selected from the group consisting of a silicone oil, a mineral oil, a vegetable oil, an animal oil, a heavy oil, a resin, a wax, a fluorine oil, an ionic liquid, and a liquid metal.

[11] Said solvent may be volatile at normal temperature and pressure.

[12] Said solvent may be at least one selected from the group consisting of water, an organic solvent, a low molecular liquid, or a mixture thereof.

[13] Said liquid of interest may be water,

said particles may be at least one selected from the group consisting of a silica particle, an alumina particle, a titania particle, and a zirconia particle,
said binder resin may be a room temperature-cured type silicone resin,
said lubricating liquid may be a silicone oil and/or a fatty acid, and
said solvent may be at least one selected from the group consisting of isopropanol, hexane, ethanol, acetone, toluene, hexadecane, dimethyl sulfoxide, and methyl ethyl ketone.

[14] A process of producing a coating composition for forming a coating film having a lubricating surface for a liquid of interest, comprising:

Mixing together particles, a binder resin for fixedly binding said particles together, a lubricating liquid that has a nonaffinity for said liquid but has an affinity for said binder, and a solvent having an affinity for said lubricating liquid,

wherein said lubricating liquid has a contact angle of 0° upon dropwise addition onto a substrate made of the same material as said particles as measured in the atmosphere, and a contact angle of 0° upon dropwise addition onto the substrate made of the same material as said particles as measured in said liquid of interest,
a volume ratio of said solvent relative to a total amount of said solvent and said lubricating liquid ranges from 0.09 to 0.95 inclusive, and
a content of said binder resin relative to the total amount of said solvent and said lubricating liquid ranges from 0.0004 g/mL to 0.050 g/mL inclusive.

[15] A process of forming a coating film having a lubricating surface for a liquid of interest, comprising: applying the aforesaid coating composition on an article.
[16] Application of said coating composition may be carried out by at least one method selected from the group consisting of dip coating, flow coating, flow coating, curtain coating, spin coating, spray coating, airless spray coating, bar coating, roll coating, and brush coating.
[17] Said article may have a surface composed of at least one material selected from the group consisting of a glass, a plastic, a rubber, a semiconductor, a metal, carbon, and a ceramic.
[18] A lubricating article kit adapted to form a coating film having a lubricating surface for a liquid of interest, comprising: the aforesaid coating composition, and an instruction manual associated with information for formation of a lubricating coating film on the article with the use of said coating composition.
[19] Said instruction manual may comprise applying said coating composition onto said article, and forming a coating film having a lubricating surface for the liquid of interest.
[20] A washer liquid containing the aforesaid coating composition.

**Advantages of the Invention**

The coating composition according to the present invention is adapted to provide a coating film the surface of which is provided with lubricity for a liquid of interest, and contains particles, a binder resin adapted to fixedly bind the particles together, a lubricating liquid having a nonaffinity for the liquid of interest but having an affinity for the binder resin, and a solvent having an affinity for the lubricating liquid. The particles are fixedly bound together by the binder resin, providing a porous underlayer. The lubricating liquid is located on a surface of the underlayer so that it can provide a liquid film functioning as a coating film (SLIPS) having a lubricating surface. The coating composition disclosed herein may be simply applied or coated on the surface of an article or the like to provide a coating film having a liquid lubricating surface. The coating composition disclosed herein may also provide a liquid lubricating article kit comprising the aforesaid coating composition disclosed herein and an instruction manual. Further, the coating composition disclosed herein may provide a washer liquid containing the coating composition according to the present disclosure.

**Brief Explanation of the Drawings**

Fig. 1 is a diagram illustrative of a Hansen solubility parameter sphere(s) of silicone oil 1 shown in Table 5.
Fig. 2 is a diagram illustrative of a Hansen solubility parameter sphere(s) of silicone oil 2 shown in Table 5.
Fig. 3 is a diagram illustrative of a Hansen solubility parameter sphere(s) of oleic acid shown in Table 5.
Fig. 4 is a flowchart of process steps of producing a coating film having a liquid lubricating surface using the coating composition.
Fig. 5 is a schematic view of a foodstuff article having a coating film having a liquid lubricating surface as obtained by using the coating composition.
Fig. 6 is a schematic view of an automobile comprising the coating film having a liquid lubricating surface as obtained by using the coating composition.
Fig. 7 is illustrative of what states the coating film obtained from the composition of Example 1 exists in.
Fig. 8 is indicative of a slide angle of water on the coating films formed of the compositions of Examples 1 to 3 and 5.
Fig. 9 is indicative of a contact angle of a lubricating liquid with a substrate comprising the particles of Example 1.
Fig. 10 is illustrative of what states the coating films formed out of the compositions of Examples 10 to 15 exist in.
Fig. 11 is illustrative of dependencies on the ratios of the lubricating liquid of a contact angle with water, and a slide angle of water, on the coating films formed out of the compositions of Example 1 and Examples 6 to 20.
Fig. 12 is illustrative of dependencies on the ratios of the lubricating liquid of a contact angle with water, and a slide

EP 4 474 434 A1

angle of water, on the coating films formed out of the compositions of Example 1 and Examples 6 to 20.

Fig. 13 shows the SEM images of the porous underlayers of the coating films formed out of the compositions in Examples 1 and 21 to 25.

Fig. 14 shows the surface roughness of the porous underlayers of the coating films formed out of the compositions of Examples 1 and 21 to 25.

Fig. 15 is illustrative of dependencies, on the surface roughness of the porous underlayers, of a contact angle with water, and a slide angle of water, on the coating films formed out of the compositions of Examples 1 and 21 to 25.

Fig. 16 is illustrative of dependencies, on the BET surface areas of particles, of a contact angle with water, and a slide angle of water, on the coating films formed out of the compositions of Examples 1 and 21 to 25.

Fig. 17 is illustrative of dependencies, on the particle diameters (primary particles diameters) of the porous underlayers, of a contact angle with water, and a slide angle of water, on the coating films formed out of the compositions of Examples 1 and 21 to 25.

Fig. 18 is indicative of the self-restorability of the coating films formed out of the coating composition according to Example 1.

Fig. 19 is illustrative of relationships between the surface tensions of various liquids on the coating films formed out of the coating composition of Example 34 and the contact angle hysteresis of the coating films with the liquids.

Fig. 20 is indicative of the contabt angle of a substrate comprising the particles of Example 34 with a lubricating liquid.

Fig. 21 is illustrative of the sliding state of the liquid of interest on the coating film formed out of the coating composition of Example 34.

Fig. 22 is indicative of the liquid lubrication of the coating film formed out of the coating composition of Example 1 as formed on a variety of articles.

Fig. 23 shows changes in the liquid delivery speed of liquid in a silicone tube.

Fig. 24 shows the results of shower testing in the presence and absence of the coating film on an automobile window.

**Modes for Carrying Out the Invention**

Some modes for carrying out the invention are now explained with reference to the accompanying drawings. It is here to be noted that similar elements are referred to by similar numerals, with no explanation thereof.

Coating Compositions

The coating compositions of the invention will now be explained.

Liquid repellency adapted to repel a liquid on the surface of a substrate comprises a phenomenon (rolling-down) where droplets formed on the surface roll down by imposing some limitation on the area of contact therewith, and a phenomenon (sliding-down) where the droplets formed on the surface slide down. As described above, the rolling-down phenomenon is encompassed in the technical scope of Patent Publication 1, whereas the sliding-down phenomenon comes under the technical scope of Patent Publications 2 and 3, with that surface called the SLIPS. Rolling down and sliding down are quite different in terms of mechanism.

With liquid repellency harnessing sliding-down in mind, the present inventors have controlled the arrangement and constitution of a composition, resulting in development of a coating composition allowing for the SLIPS, that is, a coating film having a surface giving liquid repellency to a liquid of interest (hereinafter called simply the coating film or "SLIPS" film). It should be herein noted that the "liquid-lubricating surface" refers to a surface having a slide angle of 40° or less as measured upon dropwise addition of 5 $\mu$L of droplets onto the surface of a coating film formed on a glass sheet followed by tilting.

The coating composition of the present invention contains a particle(s), a binder resin adapted to fixedly bind the particles together, a lubricating liquid having a nonaffinity for a liquid of interest but an affinity for the binder resin, and a solvent having an affinity for the lubricating liquid. The respective elements will hereinafter be explained in greater details.

Particles

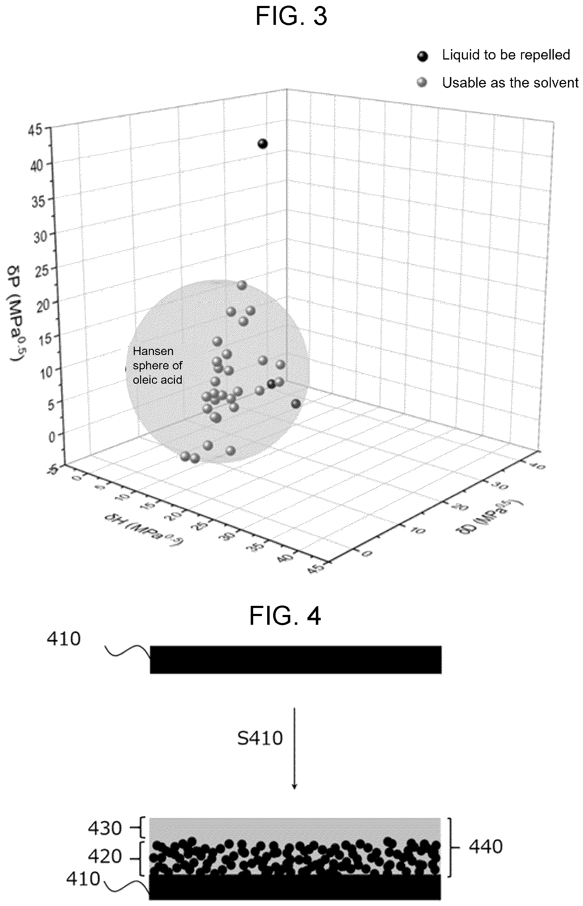

The particles provide a porous underlayer 420 as explained later with reference to Fig. 4, and there is no particular limitation thereon; any desired particles may be employed. Preferably, however, the particles may comprise at least one material selected from the group consisting of an inorganic material, an organic material, or a combination or composite thereof. For instance, when it is desired to obtain a transparent coating film in a visible region, it is preferable to select a particle and a lubricating liquid whose refractive indices are close to each other. It is preferable to select silica, and poly-methyl methacrylate as the particle and silicone oil as the lubricating liquid.

The combination or composite material used herein may comprise an organic/inorganic hybrid material, a nonmetal/metal hybrid material, an organometal hybrid material, or a material containing three or more different materials.

It is noted that the composite material refers to a single particle obtained by encapsulating one material with another material, a particle obtained by penetrating one material through another material, or a single particle obtained by allowing semi-spherical different materials to be combined or bound together. Some exemplary particle materials are shown in Table 1.

Table 1

| Inorganic Materials | Metals | titanium, aluminum, zirconium, nickel, gold, silver, copper, chromium, iron, and alloys thereof |
| | Non-Metals | silica and oxides, nitrides and oxynitrides of the aforesaid metals |
| | | glass, silicon carbide, graphite, silicon nitride |
| Organic Materials | | acrylic resins such as polymethyl methacrylate, polystyrene, polyethylene, polypropylene, polybutylene, polyvinyl alcohol, vinyl chloride, silicone, and composite materials thereof |
| Surface Modified Molecules /Compuunds | | polysiloxanes, perfluoroalkylsilanes, alkylsilanes, alkylsilazanes, phenylsilanes, alkanethiols, fluoro-alkanethiols, fluorocarboxylates (salts/esters), fluoro-alkylsulfonates (salts/esters), fluoroalkylphosphoric acids, carboxylic acids (salts/esters), alkyl sulfonic acid (salts/esters), alkyl phosphoric acid (salts/esters), alkyl ammonium salts, phenyl ammonium salts, alkylamine salts, fluoroalkyl ethers, alkyl ethers, ester ethers, alkanolamides, alkyl glycosides, alcohols (having four or more carbon chains), alkyl betaines, fatty acid amidopropyl betaines, alkylamine oxides, fluorides thereof, aminosilanes, polyethylene glycol silanes, epoxysilanes, methacrylic silanes, silane thiols, aminothiols, alcohols (having three or less carbon chains) |

As available particles may be employed, there is no specific limitation on their particle diameters. Exemplarily, use may be made of particles in the range of 3 nm to 300 nm inclusive, in which the aforesaid materials are easily available in a particulate form. Use may preferably made of particles in the diameter range of 5 nm to 200 nm inclusive, in which it is easy to form the porous underlayer 420 as explained with reference to Fig. 4. More preferably, particles in the diameter range of 5 nm to 150 nm inclusive may be used.

The BET surface area of particles, on which there is no specific limitation, may exemplarily come under the range of 20 $m^2$/g to 250 $m^2$/g inclusive, which would make it easy for the lubricating liquid to penetrate through the particles, and to be easily held on the surface thereof, leading to facilitation of formation of a liquid film 430 as explained later with reference to Fig. 4.

The particles may be modified thereon with a functional molecule which is shown in Table 1 but not limited thereto.

For instance, if the particle(s) is modified with a functional molecule containing a functional group such as an alkyl group, a fluoroalkyl group, a polymethyl siloxane group, and a phenyl group, it may be made hydrophobic on the surface, and if the particle(s) is modified with a functional molecule containing a functional group such as an amino group, an amide group, a hydroxy group, an aldehyde group, and a thiol group, it may be made hydrophilic on the surface. An expert in the art could easily opt for a particle's surface modification functional molecule.

The binder resin may have a function of fixedly binding the particles together, and for this purpose either a thermosetting resin or a thermoplastic resin may be used; however, it is preferable to use a binder resin which, after volatilization of the solvent in an ordinary environment of use, is placed by cross-linking into a solid state. From such a point of view, a room temperature-curing type resin is preferred. Here, the room temperature is from 5°C to 35°C inclusive.

Binder Resin

For example, the binder resin used may be at least one selected from the group consisting of a silicone resin, a fluororesin, an epoxy resin, a urethane resin, an olefinic resin, an acrylic resin, an ethylene/vinyl acetate resin copolymer (EVA), and a polyvinyl butyral resin (PVB).

The silicone resin, for instance, may be a polymer having polyalkylhydrogensiloxane, polydialkyldisiloxane, preferably, polysilsesquioxane, or polydimethylsiloxane as a skeleton, inclusive of a modified silicone resin having a substituent at one end, both ends, side chains or the like of a linear or branch chain polydimethylsiloxane.

For instance, the fluororesin may be polytetrafluoroethylene (PTFE), tetrafluoroethylene-hexafluoropropylene copolymer (FEP), tetrafluoroethylene-perfluoroalkyl vinyl ether copolymer (PFA), polyvinylidene fluoride (PVDF), polychlorotrifluoro-ethylene (PCTFE), tetrafluoroethylene·ethylene copolymer (ETFE), fluoroethylene vinyl ether (FEVE), or an ethylenechlorotrifluoroethylene copolymer (ECTFE).

A resin containing two or more epoxy groups per molecule may be used as the epoxy resin; for instance, it may be an epoxy resin inclusive of bisphenol A type (that may be brominated), bisphenol F type, bisphenol S type, diphenyl ether type, hydroquinone type, naphthalene type, biphenyl type, fluorene type, phenolnovolac type, ortho-cresolnovolac type, tris-hydroxyphenylmethane type, 3-function type, tetraphenylolethane type, and dicyclo-pentadienephenol type.

The urethane resin may be a copolymer comprising a polyol and an isocyanate obtained by copolymerization, and the olefine resin may be a polymer or a copolymer such as polyethylene, polypropylene, or chlorinated polyethylene.

For instance, the acrylic resin may be a polymer or a copolymer such as methyl methacrylate, isopropyl methacrylate, ethyl methacrylate, methyl acrylate, ethyl acrylate, isopropyl acrylate, n-butyl acrylate, 2-ethylhexyl acrylate, and n-butyl methacrylate.

Lubricating Liquid

The lubricating liquid is impregnated through the porous underlayer 420 in Fig. 4 referred to later, providing a liquid film 430 on the porous underlayer. There is no particular limitation on the lubricating liquid as far as it has a nonaffinity for the liquid of interest, yet an affinity for the aforesaid binder resin.

Briefly, the lubricating liquid may be judged as having a nonaffinity for the liquid of interest if there is a visible two-layer separation upon mixing of the lubricating liquid with the liquid of interest. More preferably, location of the coordinates for the Hansen solubility parameter of the liquid of interest outside of a Hansen sphere with the Hansen solubility parameter of the lubricating liquid as center shows that the lubricating liquid has a nonaffinity for the liquid of interest.

It is here understood that the Hansen solubility parameter refers to a solubility parameter introduced by Hildebrand and divided into three terms: a dispersion term, a polarity term and a hydrogen bond term for expression in a three-dimensional space. The dispersion, polarity, and hydrogen bond terms stand for an effect due to dispersion force, inter-dipolar force, and hydrogen bond force, respectively.

In the present disclosure, when the contact angle is 30° or lower upon dropwise addition of the lubricating liquid on the surface of the binder resin as measured in the atmosphere, said lubricating liquid is judged as having an affinity for the binder resin. More preferably, the contact angle is 10° or lower. This makes it possible for the lubricating liquid to infiltrate sufficiently through the porous underlayer upon homogenous mixing of the lubricating liquid with binder resin to form the porous underlayer 420.

The lubricating liquid may preferably be at least one selected from the group consisting of a silicone oil, a mineral oil, a vegetable oil, an animal oil, a heavy oil, a resin, a wax, a fluorine oil, an ionic liquid, and a liquid metal. These could satisfy the aforesaid conditions by selection of the liquid of interest and the binder resin. Of these lubricating liquids, typical ones are set out in Table 2 by way of example. The lubricating liquids shown in Table 2 are just examples to which the present invention is not limited.

In addition to the silicone oils shown in Table 2, use may also be made of modified silicone oils inclusive typically of ones modified by amino, epoxy, carboxy, carbinol, methacrylic, mercapto, and phenol.

As the lubricating liquid, it is preferable to select a substance similar in structure to the binder resin, because there is an increased enhancement in terms of affinity. For instance, there is the mention of a combination of a silicone resin as the binder resin and a silicone oil as the lubricating liquid.

Table 2

| | |
|---|---|
| Silicone oils | This oil is a linear polymer comprising siloxane bonds as represented by commercial products such as DMS-T11 made by Gelest Inc., ASO-100 made by As One, and KF-96L-2CS made by Shin-Etsu Chemical Co., Ltd. |
| Mineral oils | hydrocarbon compounds derived from petroleum, coal and natural gas |
| Vegetable oils | Oils comprised of butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, bacsenic acid, linoleic acid, linolenic acid, eleostearic acid, arachidic acid, pehenic acid, lignoceric acid, nervonic acid, cerotic acid, montanic acid, melicinic acid, crotonic acid, myristreic acid, palmitoleic acid, sapienic acid, oleic acid, elaidic acid, vaccenic acid, gadreic acid, eicosenoic acid, erucic acid, nervonic acid, linolic acid, eicosadienoic acid, docosadienoic acid, linolenic acid, pinolenic acid, eleostearic acid, mead acid, dihomo-γ-linolenic acid, eicosatrienoic acid, stearidonic acid, arachidonic acid, eicosatetraenoic acid, adrenic acid, poseopentaenoic acid, eicosapentaenoic acid, osbond acid, clupanodonic acid, tetracosapentaenoic acid, docosahexaenoic acid, nisinic acid, and ester compounds, salts and complexes thereof. |
| Animal oils | fish oils, whale oils, lards, tallows |

(continued)

| Heavy oils | asphaltenes |
|---|---|
| Resins | pine resin |
| Waxes | waxes based on plants, animals, petroleum, synthetic hydrocarbons |
| Fluorine oils | oils obtained by substituting a part or whole of hydrogen atoms in a polyalkyl ether compound with fluorine |
| Ionic liquids | compounds comprising combinations of cations based on ammonium such as imidazolium salts and pyridinium salts, phosphonium or inorganic ions and anions comprising halogen ions such as bromide ions and triflate ions, bromine ions such as tetraphenyl borate, and phosphorus ions such as hexafluorophosphate or their analogues and mixed with a deep eutectic solvent (such as a mixture of iron oxide and urea where one or both of a hydrogen bond donner and an acceptor is solid) at a certain ratio, and providing a liquid at room temperature |
| Liquid metals | mercury, Galinstan |
| Others | perfluoropolyether, polyethylene glycol, glycerin |

Solvent

There is no particular limitation on the solvent, provided that it is capable of holding the aforesaid particles, binder resin and lubricating liquid in a stable manner and having an affinity for the lubricating liquid. The solvent is preferably so volatile at normal or ordinary temperatures and pressures that it volatilizes in ordinary atmospheres; that is, just simple application of the coating composition of the invention to an article leads to formation of a coating film having liquid lubricity in a single coating process as described later with reference to Fig. 4. It is here noted that the "ordinary temperature" refers to 20°C (293K) and the "ordinary pressure" to 1 atm (absolute), and that the solvent volatile at ordinary temperatures and pressures stands for one having a vapor pressure of less than 10 Pa at 20°C and 1 atm.

Briefly, if there is no visible two-layer separation or whitish state observed upon mixing of the solvent with the lubricating liquid, the solvent may be judged as having an affinity for the lubricating liquid. More preferably, if the coordinates for the Hansen solubility parameter of the solvent are located within a Hansen sphere with the coordinates for the Hansen solubility parameter of the lubricating liquid as center, it then shows that the solvent has an affinity for the lubricating liquid.

For instance, the solvent may be at least one selected from the group consisting of water, an organic solvent, a low-molecular-weight liquid, and a combination or mixture thereof. Typical solvents are shown in Table 3 by way of example. The aforesaid conditions could be satisfied by suitable selection of lubricating liquids and solvents.

Table 3

| Water | distilled water, ion exchanged water, RO water, pure water, ultrapure water, milliQ water, sea water, brine, buffer |
|---|---|
| Organic solvent | ethanol, acetone, dimethylformamide, methanol, hexane, octane, decan, hexadecane, toluene, ethyl ether, chlorobenzene, diiodomethane, paraffin, Freon, formic acid, tetrahydrofuran, acetaldehyde, acetonitrile, acetophenone, acetylacetone, isopropanol, ethanolamine, aniline, benzaldehyde, benzene, benzyl alcohol, benzyl benzoate, butanol, methyl ethyl ketone, methyl acetate, ethyl acetate, butyl acetate, diethyl ether, chloroform, chloromethyloxysilane, cresol, cyclohexane, hexanol, dichloromethane, dichloroethane, trichloromethane, trichloroethane, diethyl carbonate, ethylene glycol, diethylene glycol, diethylene glycol monobutyl ether, butyl carbitol acetate, dimethylacetamide, dimethyl sulfoxide, dioxane, ethyl formate, ethyl hexanol, formamide, glycerin, heptane, ligroin, methoxy ethanol, acetic acid, methyl butanol formate, isoamyl acetate, triethanolamine, nitrobenzene, nitromethane, octane, octanol, pentane, pentanol, pentyl acetate, petroleum benzine, phenol, propanol, propylene glycol, propane diol, methyloxysilane, propyl ether, pyridine, tetrachloroethane, tetrachloroethylene, perchloroethylene, tetralin, triethylamine, trifluoroacetic acid, xylene, and structural isomers, optical isomers, halogenides (bromides and fluorides), and metallized materials (organic silane) thereof |
| Low-molecular-weight liquids | liquid hydrogen, liquid nitrogen, liquid helium |

Affinity and Nonaffinity

Typical solvent/liquid affinities and nonaffinities relative to the lubricating liquid provided by silicone oil, oleic acid as the vegetable oil, perfluoroether, liquid olefin as a hydrocarbon compound derived from petroleum, and polyethylene glycol are listed in Table 4. If there was a two-layer separation or whitish states observed 5 minutes after each lubricating liquid (0.1 mL) was mixed, and well stirred, with each solvent/liquid (0.1 mL), the solvent was determined to have a nonaffinity (0), and if there was no two-layer separation or whitish states observed, the solvent was judged to have an affinity (1). With reference to Table 4, suitable lubricating liquids and solvents may be selected for the liquid of interest.

Table 4

| Solvents/Liquids | Lubricating Liquids | | | | | |
|---|---|---|---|---|---|---|
| | Silicone Oil- 1 | Silicone Oil- 2 | Oleic Acid | Perfluoropolyether | Liquid Paraffine | Polyethy -lene glycol |
| 1.4-Dioxane | 1 | 0 | 1 | 0 | 0 | 1 |
| 1-Butanol | 1 | 1 | 1 | 0 | 0 | 1 |
| 2-propanol(isopropanol) | 1 | 1 | 1 | 0 | 0 | 1 |
| 2-Phenoxy Ethanol | 0 | 0 | 1 | 0 | 0 | 1 |
| Acetone | 1 | 0 | 1 | 0 | 0 | 1 |
| Acetonitrile | 0 | 0 | 0 | 0 | 0 | 1 |
| Chloroform | 1 | 1 | 1 | 1 | 1 | 1 |
| Cyclohexane | 1 | 0 | 1 | 1 | 1 | 1 |
| Cyclohexanol | 0 | 0 | 1 | 0 | 1 | 1 |
| Di-(2-Ethylhexyl)Azelate | 1 | 0 | 1 | 0 | 1 | 0 |
| Diacetone Alcohol | 0 | 0 | 1 | 0 | 0 | 1 |
| Diethylene Glycol | 0 | 0 | 1 | 0 | 0 | 1 |
| Dimethyl Formamide | 0 | 0 | 1 | 0 | 0 | 1 |
| Dimethyl Sulfoxide | 0 | 0 | 1 | 0 | 0 | 1 |
| Dipropylene Glycol | 0 | 0 | 1 | 0 | 0 | 1 |
| Ethanol 99.9% | 0 | 0 | 1 | 0 | 0 | 1 |
| Ethyl Acetate | 1 | 1 | 1 | 0 | 1 | 1 |
| Gamma Butyrolactone | 0 | 0 | 1 | 0 | 0 | 1 |
| Glycerol | 0 | 0 | 0 | 0 | 0 | 1 |
| Hexane | 1 | 1 | 1 | 0 | 1 | 0 |
| Methyl Ethyl Ketone (MEK) | 1 | 1 | 1 | 0 | 1 | 1 |
| Methanol | 0 | 0 | 1 | 0 | 0 | 1 |
| Methyl Isobutyl Ketone | 1 | 1 | 1 | 0 | 1 | 1 |
| Methylene Dichloride | 1 | 1 | 1 | 0 | 1 | 1 |
| n-Butyl Acetate | 1 | 1 | 1 | 0 | 1 | 1 |
| N-Methyl Pyrrolidone | 0 | 0 | 1 | 0 | 0 | 1 |
| n-hexadecane | 1 | 1 | 1 | 0 | 1 | 0 |
| oleic acid | 0 | 0 | 1 | 0 | 1 | 1 |
| Perfluoropolyether | 0 | 0 | 0 | 1 | 0 | 0 |
| Polyethylene Glycol | 0 | 0 | 1 | 0 | 0 | 1 |

(continued)

| Solvents/Liquids | Lubricating Liquids | | | | | |
|---|---|---|---|---|---|---|
| | Silicone Oil- 1 | Silicone Oil- 2 | Oleic Acid | Perfluoropolyether | Liquid Paraffine | Polyethy-lene glycol |
| Propylene Glycol Mono-methyl Ether | 1 | 1 | 1 | 0 | 0 | 1 |
| Propylene Glycol Monomethyl Ether Acetate | 1 | 1 | 1 | 0 | 0 | 1 |
| Propylene Carbonate | 0 | 0 | 0 | 0 | 0 | 1 |
| Tetrachloroethylene | 1 | 1 | 1 | 0 | 1 | 0 |
| Tetrahydrofuran | 1 | 1 | 1 | 0 | 1 | 1 |
| Toluene | 1 | 1 | 1 | 0 | 1 | 1 |
| Water | 0 | 0 | 0 | 0 | 0 | 1 |

As described above, the Hansen sphere with the coordinates for the Hansen solubility parameter of the lubricating liquid as center may be used for determination of affinity or nonaffinity. Shown in Table 5 are the Hansen solubility parameters of the aforesaid typical lubricating liquids, the radii of the Hansen spheres, etc., and shown in Table 6 are the Hansen solubility parameters of typical solvents/liquids. For the definition and calculation of the Hansen solubility parameter, see Charles M, Hansen "Hansen Solubility Parameters; A Users Handbook, Second Edition (CRC Press, 2007)". The use of computer software "Hansen Solubility Parameters in Practice (HSPiP) also renders it possible to easily estimate the Hansen solubility parameters of various liquids not reported in literatures from their chemical structures. It is noted that the Hansen solubility parameters given herein are reported in literatures.

Table 5

| Lubricating Liquids | Silocone Oil 1 | Silicone Oil 2 | Oleic Acid | Perfluoropolyether | Liquid Paraffine | Polyethylene glycol |
|---|---|---|---|---|---|---|
| Central coordinates for the Hansen sphere | $D_{lub}$ = 14.75 $P_{lub}$=0.00 $H_{lub}$=5.23 | $D_{lub}$= 14.78 $P_{lub}$=5.76 $H_{lub}$=3.74 | $D_{lub}$= 15.67 $P_{lub}$=6.09 $H_{lub}$=11.21 | $D_{lub}$ = 16.37 $P_{lub}$=0.10 $H_{lub}$=4.26 | $D_{lub}$ = 16.64 $P_{lub}$=5.08 $H_{lub}$=3.27 | $D_{lub}$= 13.08 $P_{lub}$=12.33 $H_{lub}$=7.34 |
| Radius of the Hansen sphere | R= 10.6 | R= 7.9 | R= 12.9 | R= 4.2 | R= 6.9 | R= 15.2 |
| R2 value | Fit= 0.867 | Fit= 0.623 | Fit= 1.000 | Fit= 0.991 | Fit= 0.787 | Fit= 0.627 |
| Solvent having the coordinates within the Hansen sphere irrespective of being undissolved | Diacetone Alcohol | Cyclohexane | None | Toluene | 1.4-Dioxane | Di(2-ethylhexyl)azelate |
| | - | Di(2-ethylhexyl)azelate | | - | Acetone | Hexane |
| | - | Diacetone Alcohol | | - | Propylene glycol mono-methyl ether acetate | - |

(continued)

| Lubricating Liquids | Silocone Oil 1 | Silicone Oil 2 | Oleic Acid | Perfluoropolyether | Liquid Paraffine | Polyethylene glycol |
|---|---|---|---|---|---|---|
| Solvent having the coordinates outside the Hansen sphere irrespective of being dissolved | 1-Butanol | 1-Butanol | None | Chloroform | Cyclohexanol | Cyclohexane |
| | Acetone | Propylene glycol monomethyl ether | | - | Hexane | Methanol |
| | - | Tetrachloroehtylene | | - - | - | Toluene |
| | - | Toluene | | - | - | - |

Table 6

| Solvents/Liquids | Hansen Solubility Parameter | | |
|---|---|---|---|
| | $D_{sol}[(MPa)^{0.5}]$ | $P_{sol}[(MPa)^{0.5}]$ | $H_{sol}[(MPa)^{0.5}]$ |
| 1.4-Dioxane | 17.5 | 1.8 | 9.0 |
| 1-Butanol | 16.0 | 5.7 | 15.8 |
| 2-Phenoxy Ethanol | 17.8 | 5.7 | 14.3 |
| Acetone | 15.5 | 10.4 | 7.0 |
| Acetonitrile | 15.3 | 18.0 | 6.1 |
| Chloroform | 17.8 | 3.1 | 5.7 |
| Cyclohexane | 16.8 | 0.0 | 0.2 |
| Cyclohexanol | 17.4 | 4.1 | 13.5 |
| Di-(2-Ethylhexyl)Azelate | 16.2 | 4.7 | 8.4 |
| Diacetone Alcohol | 15.8 | 8.2 | 10.8 |
| Diethylene Glycol | 16.6 | 12.0 | 19.0 |
| Dimethyl Formamide | 17.4 | 13.7 | 11.3 |
| Dimethyl Sulfoxide | 18.4 | 16.4 | 10.2 |
| Dipropylene Glycol | 16.5 | 10.6 | 17.7 |
| Ethanol 99.9% | 15.8 | 8.8 | 19.4 |
| Ethyl Acetate | 15.8 | 5.3 | 7.2 |
| Gamma Butyrolactone | 18.0 | 16.6 | 7.4 |
| Hexane | 14.9 | 0.0 | 0.0 |
| Methyl Ethyl Ketone (MEK) | 16.0 | 9.0 | 5.1 |
| Methanol | 14.7 | 12.3 | 22.3 |
| Methyl Isobutyl Ketone | 15.3 | 6.1 | 4.1 |
| Methylene Dichloride | 17.0 | 7.3 | 7.2 |
| n-Butyl Acetate | 15.8 | 3.7 | 6.3 |
| N-Methyl Pyrrolidone | 18.0 | 12.3 | 7.2 |
| Propylene Glycol Monomethyl Ether | 15.6 | 6.3 | 11.6 |
| Propylene Glycol Monomethyl Ether Acetate | 15.6 | 5.6 | 9.8 |
| Propylene Carbonate | 20.0 | 18.0 | 4.1 |
| Tetrachloroethylene | 18.3 | 5.7 | 0.0 |

(continued)

| Solvents/Liquids | Hansen Solubility Parameter | | |
|---|---|---|---|
| | $D_{sol}[(MPa)^{0.5}]$ | $P_{sol}[(MPa)^{0.5}]$ | $H_{sol}[(MPa)^{0.5}]$ |
| Tetrahydrofuran | 16.8 | 5.7 | 8.0 |
| Toluene | 18.0 | 1.4 | 2.0 |
| Water | 15.5 | 16.0 | 42.3 |

In the case where the Hansen solubility parameters of Tables 5 and 6 are given, the affinity/nonaffinity between the liquids or solvents and the lubricating liquids may be judged from the following formula (1) or (2).

$$[D_{sol}-D_{lub}]^2+[P_{sol}-P_{lub}]^2+[H_{sol}-H_{lub}]^2<R^2 \quad (1)$$

$$[D_{sol}-D_{lub}]^2+[P_{sol}-P_{lub}]^2+[H_{sol}-H_{lub}]^2>R^2 \quad (2)$$

where $D_{sol}$, $P_{sol}$, and $H_{sol}$ stand for the dispersion term, polarity term and hydrogen bond term of the solvent or liquid, respectively; $D_{lub}$, $P_{lub}$ and $H_{lub}$ stand for the dispersion term, polarity term and hydrogen bond term of the lubricating liquid, respectively; and R stands for the radius of the Hansen sphere of the lubricating liquid.

When the solvent and lubricating liquid selected satisfy Formula (1) (that is, when the coordinates for the Hansen solubility parameter of the solvent are located in the Hansen sphere with the coordinates for the Hansen solubility parameter of the lubricating liquid as center), the solvent and lubricating liquid are determined to have an affinity for each other so that they can be homogenously mixed together for use as a solvent. When the solvent and lubricating liquid selected satisfy Formula (2) (that is, when the coordinates for the Hansen solubility parameter of the liquid are located outside of the Hansen sphere with the coordinates for the Hansen solubility parameter of the lubricating liquid as center), the liquid and lubricating liquid can be determined to have a nonaffinity for each other so that the lubricating liquid could repel the liquid.

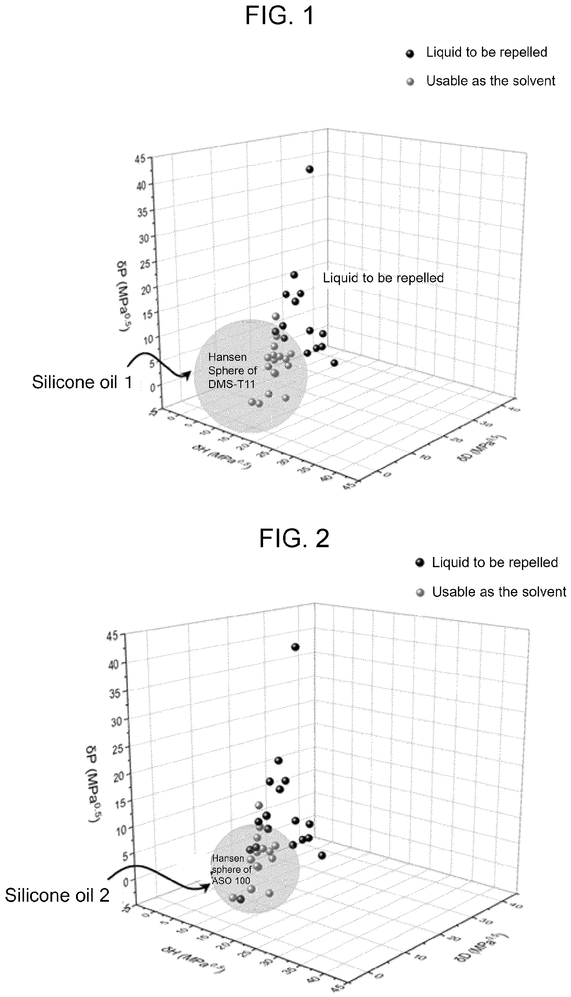

For further reference, the results of calculation of relationships between Formulae (1) and (2) provided for typical lubricating liquids and solvents or liquids are shown in Figs. 1, 2 and 3.

Fig. 1 shows some Hansen solubility parameter spheres of silicone oil 1 in Table 5.

Fig. 2 shows some Hansen solubility parameter spheres of silicone oil 2 in Table 5.

Fig. 3 shows some Hansen solubility parameter spheres of oleic acid in Table 5.

In Figs. 1, 2 and 3, a region densely dotted in a gray scale is indicative of Hansen spheres of the lubricating liquid selected, wherein a solvent located in the Hansen sphere has an affinity for the lubricating liquid, and a liquid located outside of the Hansen sphere shows a nonaffinity for the lubricating liquid. As exemplified in Figs. 1, 2 and 3, there are numerous options for the lubricating liquid and the liquid or solvent; however, an expert in the art may optionally select a lubricating liquid that shows a nonaffinity for the liquid of interest but an affinity for the solvent, as occasion may be.

Contact Angle

The lubricating liquid contained in the coating composition disclosed herein has a contact angle of 0° upon added dropwise onto a substrate formed with the same material as particles as measured in the atmosphere. As can be seen from Fig. 4 described later, upon formation of a porous underlayer 420 by particles, a liquid film comprising a lubricating liquid is stabilized on the porous underlayer 420. The angle of contact according to JIS R 3257 is measured by dropwise addition of the selected lubricating liquid on a substrate comprising the same material as particles, and finally determined after the elapse of sufficient time. The substrate used for estimation may or may not be porous.

The lubricating liquid contained in the coating composition disclosed herein has a contact angle of 0° upon dropwise addition thereof onto a substrate formed with the same material as particles in a liquid of interest. Consequently, the liquid of interest slides down on a surface of the liquid film 430 comprising the lubricating liquid in Fig. 4 described later. The angle of contact may be measured by the same contact angle measurement as mentioned above, except for measurement in the liquid, and finally determined after the elapse of sufficient time.

Volume Ratio of the Lubricating Liquid

The coating composition disclosed herein satisfies a range of 0.09 to 0.95 inclusive in terms of the volume ratio of the lubricating liquid relative to a total amount of the solvent and lubricating liquid. When the volume ratio of the lubricating liquid relative to the total amount of the solvent and lubricating liquid is less than 0.09, the lubricating liquid is reduced in amount, failing to form any liquid film 430 and showing no liquid lubrication. When the volume ratio of the lubricating liquid relative to the total amount of solvent and lubricating liquid is more than 0.95, on the other hand, the lubricating liquid becomes increased in amount; the proportion of the particles and binder resin is relatively decreased, rendering the coating film comprising the lubricating liquid less stabilized on the porous underlayer 420.

The volume ratio of the lubricating liquid relative to the total amount of the solvent and lubricating liquid satisfies a range of preferably 0.16 to 0.95 inclusive, in which a SLIPS coating film transparent to visible light could be formed. In the present disclosure, the "transparent to visible light" means that there is a transmittance of 85% or more obtained with respect to a wavelength of 550 nm.

The volume ratio of the lubricating liquid relative to the total amount of the solvent and lubricating liquid satisfies a range of more preferably 0.16 to 0.92 inclusive, in which the slide angle could be set at 1° or lower, providing a good enough SLIPS coating film.

Content of the Binder Resin

The coating composition disclosed herein satisfies a range of 0.0004 g/mL to 0.05 g/mL inclusive in terms of the content of the binder resin relative to the total amount of the solvent and lubricating liquid. With the content of the binder resin being less than 0.0004 g/mL or more than 0.05 g/mL, the amount of the binder resin becomes improper, failing to form any porous underlayer 420.

The content of the binder resin relative to the total amount of the solvent and lubricating liquid comes in a range of preferably 0.0006 g/mL to 0.03 g/mL inclusive, which could result in facilitated formation of the porous underlayer 420. More preferably, the content of the binder resin relative to the total amount of the solvent and lubricating liquid comes in a range of 0.1 g/mL to 0.5 g/mL inclusive, which ensures that the porous underlayer 420 could have a higher transmittance.

Content of the Particles

It is understood that although there is no particular limitation on the content of particles in the coating composition disclosed herein, it is preferable that the content of particles relative to the total amount of the solvent and lubricating liquid satisfies a range of 0.001 g/mL to 0.1 g/mL inclusive, which could result in facilitated formation of the porous underlayer 420. More preferably, the content of particles relative to the total amount of the solvent and lubricating liquid satisfies a range of 0.005 g/mL to 0.05 g/mL inclusive, in which the porous underlayer 420 could have a good quality. Most preferably, the content of particles relative to the total amount of the solvent and lubricating liquid satisfies a range of 0.005 g/mL to 0.02 g/mL inclusive, in which the porous underlayer 420 could have a higher transmittance, allowing for the SLIPS coating film to have a smaller slide angle.

Exemplary Combinations

When the liquid of interest is water, it is preferable that the coating composition disclosed herein contains at least one particle selected from the group consisting of a silica particle, a titania particle and a zirconia particle, a binder resin that is a room temperature cured type silicone resin, a lubricating liquid that is a silicone oil and/or a fatty acid, and at least one solvent selected from the group consisting of isopropanol, hexane, ethanol, acetone, toluene, hexadecane, dimethyl sulfoxide, and methyl ethyl ketone. With these combinations capable of satisfying the aforesaid conditions, it is possible to form a SLIPS coating film allowing water to slide down.

It is a matter of course that even when the liquid of interest is other than water, an expert in the art could optionally design any desired coating composition in such a way to meet the aforesaid conditions with reference to Tables 1 to 6. Liquids other than water may be any desired ones such as the aforesaid solvents, lubricating liquids, and chemicals.

How to Produce the Coating Composition

How to produce the coating composition of the invention will now be explained.

All that is needed to produce the coating composition according to the process disclosed herein is mixing of particles forming a porous underlayer, a binder resin that fixedly binds the particles together, a lubricating liquid that has a nonaffinity for the liquid of interest, yet an affinity for the lubricating liquid, and a solvent having an affinity for the lubricating liquid. It is here noted that the particle, binder resin, lubricating liquid and solvent will not be explained any longer because of being the same as described above.

Formation of The Coating Film Having A Lubricating Surface

The process of forming a coating film (SLIPS coating film) having a lubricating surface using the coating composition of the invention will now be explained.

Fig. 4 is a flowchart showing workflow steps of producing a coating film having a lubricating surface using the coating composition of the invention.

Because the coating film having a lubricating surface is to be formed on an article or object, an article 410 on which it is desired to form the coating film is first provided. The article 410 in a state of readiness may be provided with the coating composition of the invention (Step 410).

The present inventors have found that the coating film 440 having a lubricating surface may be formed by simple application of the coating composition disclosed herein on the desired article 410. Upon application of the coating composition on the article 410, the solvent starts to vaporize off. In association with the vaporization of the solvent, the particles begin to deposit on the surface of the article 410, and are then fixedly bonded together by the binder resin, providing a porous underlayer 420. At the same time, the lubricating liquid infiltrates into the resultant porous underlayer 420 formed with particles, while it is deposited and agglutinated on the surfaces of particles (on the surface of the porous underlayer 420) to form a liquid film 430 on the porous underlayer 420. Simple coating of the present coating composition on the desired article 410 can provide a coating film 440 having a lubricating surface.

The composition may also be applied on the article 410 while the latter is heated, thereby facilitating vaporization of the solvent. Alternatively, the composition may be applied on the article 410 while the environment therearound may be reduced in pressure, thereby facilitating vaporization of the solvent. As a matter of course, heating and reduced pressure may be used in combination.

Article

Although the article 410 is shown in the form of a flat sheet for simplicity in Fig. 4, it is not limited thereto. There is no particular limitation on the surface of article 410 provided that it can be coated with the coating composition. For instance, that surface may have a curvature, or it may be curved or have irregularities.

There is no particular limitation on the material for article 410 as far as it can be coated with the present coating composition; in view of adhesion, however, the article may have a surface formed with at least one material selected from the group consisting of glasses, plastics, rubbers, semiconductors, metals, carbon, and ceramics.

The glasses usable herein are not limited a silicate glass (inclusive of soda lime glass, borosilicate glass, and quartz), they may be acrylic glass, chalcogenide glass, metal glass, and organic glass.

The plastics are the so-called synthetic resins. The rubbers may be naturally occurring rubber or synthetic rubber. The semiconductors may be a silicon semiconductor, a germanium semiconductor, and a compound semiconductor such as GaAs, GaP, InP, and InGaAs. The metal may be a single metal or an alloy such as stainless steel.

The carbon may be a carbon fiber laminated sheet, a carbon fiber-reinforced plastic (CFRP), or a carbon fiber-reinforced composite material. The ceramics that are a sintered material obtained by sintering an inorganic material by heating may be oxide, carbide, nitride, boride, oxynitride, boroxid or the like of a metal or nonmetal.

Application Method

There is no specific limitation on how to apply the coating composition; any known method may be used inclusive of, for instance, at least one selected from the group consisting of dip coating, flow coating, flow coating, curtain coating, spin coating, spray coating, airless spray coating, bar coating, roll coating, and brush coating.

Optional or unessential drying may be carried out for the purpose of facilitating formation of a coating film or in a special environment as by heating, air-drying (using hot air or cold air), and freeze-drying.

Prior to application of the coating composition, the article 410 may be washed on the surface by water or alcohol, thereby removing contaminations from the surface and leading to an improvement in adhesion between the article 410 and the SLIPS coating film 440.

Lubricating Article Kit

A lubricating article kit of the present invention comprises the coating composition disclosed herein and an instruction manual.

According to the lubricating article kit disclosed herein wherein the article is provided with the coating composition together with the instruction manual comprising information recorded for formation of a lubricating coating film on the surface of the article, it is possible for a user to form a lubricating coating film on the surface of any desired article with reference to this instruction manual. The coating composition will not be explained any longer because of being the same as mentioned above. To the information for formation of the coating film having a lubricating surface, how to form the coating film having a lubricating surface and comprising the aforesaid coating composition may be applied.

In the present disclosure, the instruction manual having the aforesaid information recorded therein, for instance, may be a computer-readable recording medium such as a magnetic recording medium, an optical recording medium, a semiconductor memory, and paper, films and fabrics as well.

There is no particular limitation on the form of recording information in the instruction manual; the information may be recorded in such a way as to be directly readable by a human and/or a computer, or the means of making the information readable via communication lines such as the Internet (for example, a URL wherein how to coat the coating composition is described, a (two-dimensional) bar code with that URL described therein, or the like) may be recorded. It is herein noted that the term "recording" comprises a paper medium having the information printed thereon.

Representatively but not exclusively, an exemplary lubricating article kit includes a container, a coating composition received in the container, and a label seal annexed to the container wherein the label seal is in such a form as to have the method of applying the coating composition onto the article described therein. The "method of applying the coating composition" entered in the label seal may comprise a preferable application method, the type of liquid of interest, etc. as an example.

Applications

In what follows, an exemplary application of the coating composition and lubricating article kit according to the present invention will be shown.

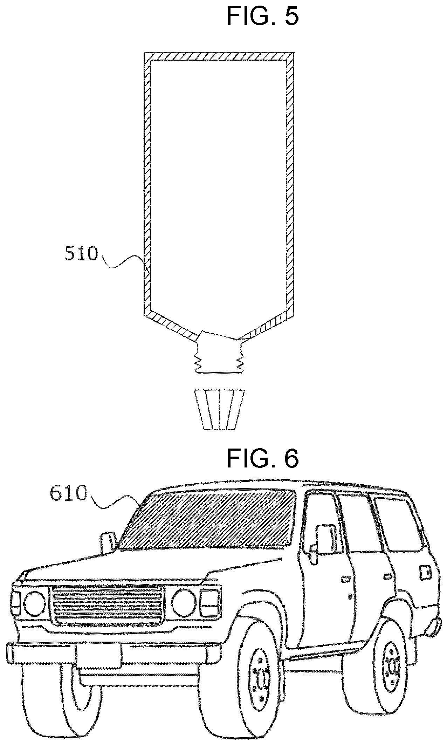

Fig. 5 is a schematic view showing a foodstuff container comprising a coating film 510 having a lubricating surface formed of a coating composition.

It is here assumed that the food contained in a food container is mayonnaise dressing and the liquid of interest is mayonnaise dressing. A coating composition containing silica nanoparticles as the particles, polydimethylsiloxane as the binder resin, a silicone oil as the lubricating liquid and isopropanol as the solvent is used as the coating composition capable of forming a coating film for mayonnaise dressing with a lubricating surface.

According to the process of producing a coating film having a lubricating surface as shown in Fig. 4 or the instruction manual for the lubricating article kit, the coating composition of the invention is applied onto an inner wall of the food container to form a coating film 510 having a lubricating surface on the inner wall.

Thus, the liquid of interest (mayonnaise dressing here) slides down the inner wall of the food container without remaining in the food container so that the user can make full use of it without recourse to any container washing upon disposal.

Fig. 6 is a schematic view of an automobile equipped with a coating film 610 formed of the coating composition with a lubricating surface.

It is here assumed that the liquid of interest is water such as rain or snow. The aforesaid coating composition exemplified in the case where the liquid of interest is water is used to apply the inventive coating composition to the front glass of the car thereby forming the coating film 610 on the surface of the front glass with a lubricating surface according to the process of producing a coating film having a lubricating surface as shown in Fig. 4 or the instruction manual for the lubricating article kit.

Consequently, the liquid of interest (water such as rain here) slides down the surface of the front glass so that the user can make sure of a good enough field of view at the time of rain or the like. The thus obtained coating film 610 having a lubricating surface, because of having self-restorability, is unlikely to break down even upon subjected to friction by wipers or it has enhanced durability.

Further, the coating composition of the invention is capable of forming a coating film having a lubricating surface by simple application onto the desired article so that if it is used as a washer liquid adapted to wash the front glass of a car, there can then be a coating film 610 formed with a lubricating surface.

It is understood that although some exemplary applications of the inventive coating composition are explained with reference to Figs. 5 and 6, they are provided for the purpose of exemplification alone. Of course, they are applicable to any desired industry inclusive of, in addition to foods and automobiles, medical, chemical, petroleum and agricultural industries.

It should be noted that the present invention is in no sense limited to some specific examples with reference to which the present invention will be described in greater details.

Examples

Starting Materials Used

(1) Particles

The following particles were used for formation of the porous underlayer.

· Hydrophobic silica nanoparticles 1 (AEROSIL RX 200 made by Nippon Aerosil Co., Ltd. with a particle diameter of 12 nm and a BET specific surface area of $142\pm25$ m$^2$/g)

· Hydrophobic silica nanoparticles 2 (AEROSIL RX 50 made by Nippon Aerosil Co., Ltd. with a particle diameter of 40 nm and a BET specific surface area of $35\pm10$ m$^2$/g)

· Hydrophobic silica nanoparticles 3 (AEROSIL RX 300 made by Nippon Aerosil Co., Ltd. with a particle diameter of 7 nm and a BET specific surface area of $200\pm20$ m$^2$/g)

· Hydrophobic silica nanoparticles 4 (QSG-10 made by Shin-Etsu Chemical Co., Ltd. with a particle diameter of 14 nm and a BET specific surface area of 160 m$^2$/g)

· Hydrophobic silica nanoparticles 5 (QSG-30 made by Shin-Etsu Chemical Co., Ltd. with a particle diameter of 40 nm and a BET specific surface area of 150 m$^2$/g)

· Hydrophobic silica nanoparticles 6 (QSG-100 made by Shin-Etsu Chemical Co., Ltd. with a particle diameter of 117 nm and a BET specific surface area of 25 m$^2$/g)

· Hydrophilic silica nanoparticles 7 (AEROSIL OX50 made by Nippon Aerosil Co., Ltd. with a particle diameter of 40 nm and a BET specific surface area of $50\pm15$ m$^2$/g)

· Hydrophilic silica nanoparticles 8 (AEROSIL 200 made by Nippon Aerosil Co., Ltd. with a particle diameter of 12 nm and a BET specific surface area of $200\pm25$ m$^2$/g)

· Hydrophilic alumina nanoparticles (AEROXIDE Alu 65 made by Nippon Aerosil Co., Ltd. with a particle diameter of 50 nm and a BET specific surface area of 55 to 75 m$^2$/g)

· Hydrophobic titania nanoparticles (AEROXIDE TiO$_2$ NKT90 made by Nippon Aerosil Co., Ltd. with a particle diameter of 14 nm and a BET specific surface area of 55 to 75 m$^2$/g)

(2) Binder Resins

The binder resins used are described just below, all being silicone resins having polydimethylsiloxane as a skeleton.

• One-part room temperature-cured (RTV) silicone rubber (DOWSIL(registered trademark) HC 2100 made by the Dow Chemical Company)

• Two-part room temperature-cured (RTV) silicone rubber (SYLGARD(registered trademark) 184 Silicone Elastomer Kit made by the Dow Chemical Company)

(3) Binder Resins

The solvents, liquids or lubricating liquids used are described just below.

• Isopropanol (made by FUJIFILM Wako Pure Chemical Corporation)

• Hexane (made by FUJIFILM Wako Pure Chemical Corporation) · Ethanol (made by FUJIFILM Wako Pure Chemical Corporation)

• Dichloropentanefluoropropane (Asahicrin◇(registered trademark) AK-225 made by AGC Co., Ltd.)

• Acetone (made by FUJIFILM Wako Pure Chemical Corporation)

• Toluene (made by FUJIFILM Wako Pure Chemical Corporation)

• n-hexadecane (made by FUJIFILM Wako Pure Chemical Corporation)

• Ultrapure water

• Silicone oil 1 (DMS-T11 made by Gelest Co., Ltd. with an average molar mass of 1250 g/mol and a viscosity of 1x 10$^{-8}$ m$^2$/s)

• Silicone oil 2 (ASO-100 made by As One with a viscosity of $1 \times 10^{-4}$ m$^2$/s)

• Oleic acid (made by FUJIFILM Wako Pure Chemical Corporation)

• Perfluoropolyether (Krytox(registered trademark) GPL-103 made by Chemours Co., Ltd.)

• Liquid paraffin (made by FUJIFILM Wako Pure Chemical Corporation)

• Glycerin (glycerol) (made by Tokyo Chemical Industry Co., Ltd.)

• Polyethylene glycol (PEG-400 made by FUJIFILM Wako Pure Chemical Corporation with a number average molecular weight of 400)

**Examples 1 to 44**

Preparation of the Coating Compositions

In Examples 1 to 44, various coating compositions were prepared, and then used for formation of coating films.

More specifically, the nanoparticles, binder resins, solvents and lubricating liquids were weighed in such a way as to satisfy the components and compositions set out in Tables 7 to 17, and then stirred by a magnetic stirrer at room temperatures (20°C) to prepare coating compositions.

Measurement of contact angle of the lubricating liquids

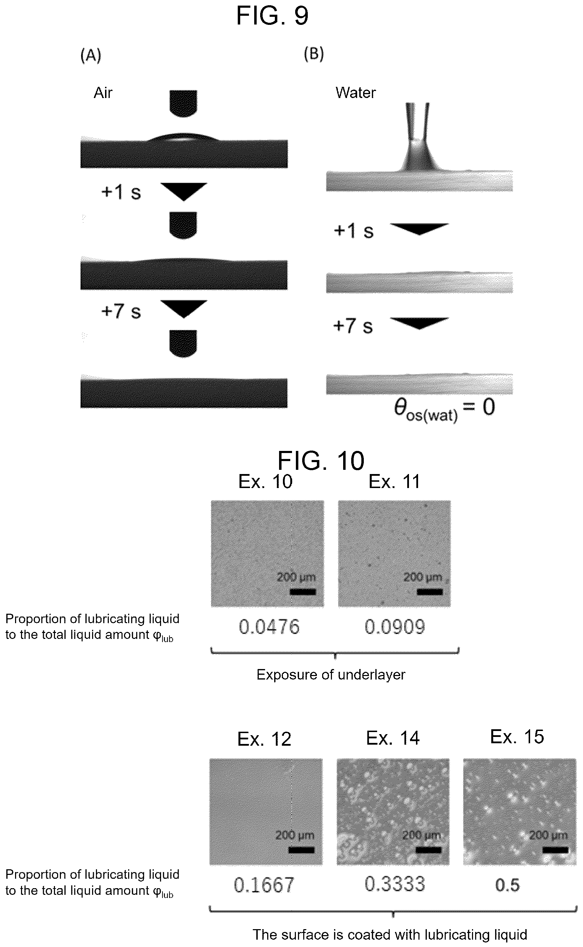

A substrate obtained by forming the indicated nanoparticles in a flat plate shape was provided to measure the contact angle upon dropwise addition of the indicated lubricating liquids thereto in water or air. A substrate formed with the binder resin was provided to measure the contact angle upon dropwise addition of the indicated lubricating liquids thereto in air. The angles of contact were measured by the $2\theta$ method making use of a contact angle meter (Drop master-SA-Cs1 made by Kyowa Interface Science Co., Ltd.). The results are shown in Fig. 9 and Tables 7 to 17.

Preparation of the Coating Films

The thus obtained coating compositions were each applied to a glass sheet (made by Muto Chemicals Co., Ltd. with a size of 1.0x26x76 mm) to prepare coating films (Step S410 in Fig. 4) by either spray coating (comprising spraying of the coating composition) or dip coating (comprising dipping of the glass sheet in the coating composition).

Observation of the Coating Films

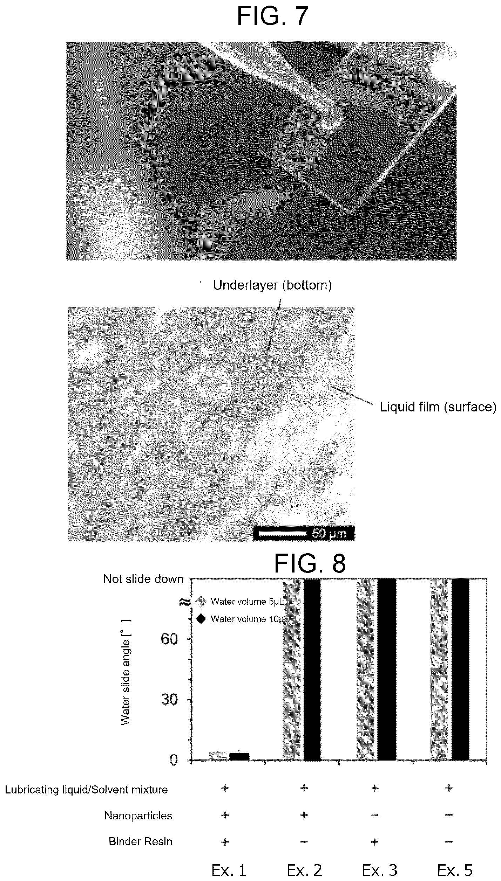

The states of the coating films obtained in Example 1 were observed by a scanning electron microscope (FE-SEM S-4800 made by Hitachi High-Tech Corporation). The results of observation are shown in Fig. 7, and the results of observation of the coating films obtained in Examples 10 to 12 as well as Examples 14 and 15 are shown in Fig. 10.

Measurement of the contact angle of the coating film with water and the slide angle of water

The contact angle of water was measured upon dropwise addition of 5 $\mu$L of water droplets onto the surface of the resulting coating film. The slide angle of water droplets were also measured when the glass plate was inclined upon dropwise addition of 5 $\mu$L of water droplets onto the surface of the coating film. The results of measurements are shown in Fig. 8, Fig. 11, Figs. 15 to 17 and Tables 7 to 17. It is noted that "-" in the tables indicates that the water droplets did not slide down.

Estimation of Self-Restorability

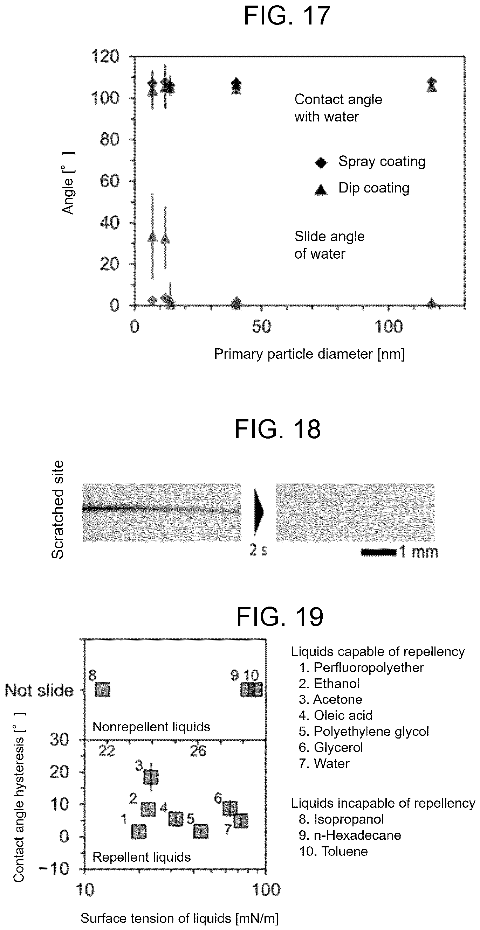

The surface of each of the thus obtained coating films was scratched with a force of about 0.3 N from an angle of 45° by means of a cutter having a blade width of 0.4 mm, and left standing for examination of self-restorability on the following basis. The results of estimation are shown in Fig. 18 and Tables 7 to 17.

   ∘ indicates that the scratch remains invisible or goes out; the coating film is capable of self-restoration.
   △ indicates that the scratch is still visible, but there is no change in the slide angle; the coating film is somewhat capable of self-restoration.
   × indicates that the scratch remains still visible with no sliding of water droplets down the scratch site, meaning that there is no self-restorability.

Measurement of Transmittance

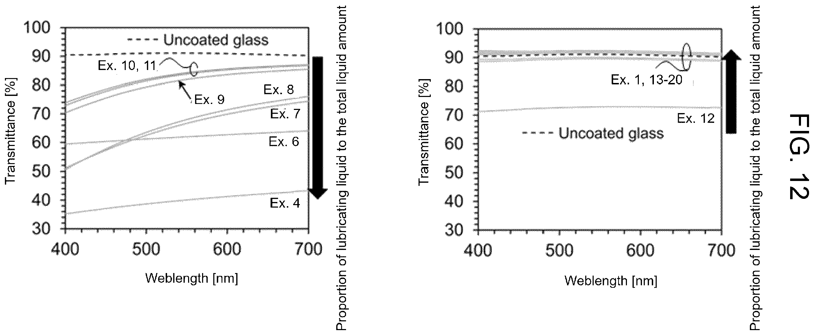

Each of the glass sheets having a coating film formed thereon was measured by a spectrophotometer (V-770 made by JASCO Corporation) in terms of transmittance. More specifically, the transmittance (%) of the glass sheet was measured at a wavelength of 550 nm. The results of measurements are shown in Fig. 12 and Tables 7 to 17.

SEM Observation

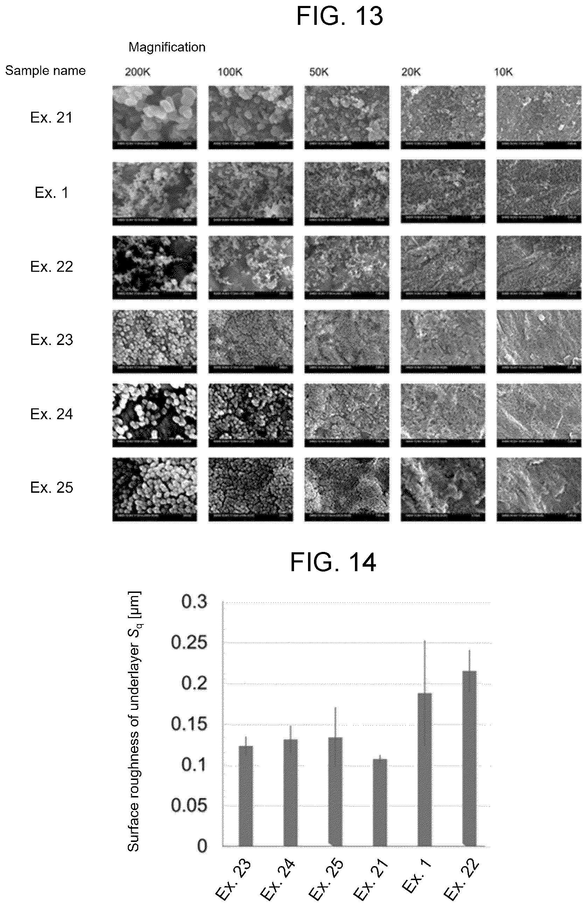

Each of the glass sheets having a coating film formed thereon obtained in Example 1 and Examples 21 to 25 was subjected to supercritical drying, and observed by the SEM in terms of the state of the porous underlayer comprising particles, and examined by energy dispersion X-ray spectroscope (EDX) annexed to the SEM in terms of composition. For supercritical drying a supercritical dryer (SYGLCP-81 made by Sanyu Gijutsu Co., Ltd.) was used with carbon dioxide as a supercritical fluid. The results are shown in Fig. 13.

Measurement of the Surface Roughness of the Porous Underlayer

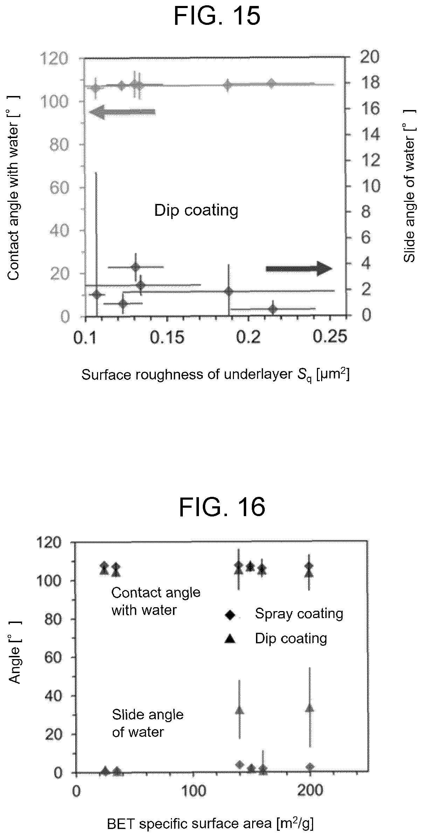

The coating films obtained in Example 1 and Examples 21 to 25 were each measured by a laser microscope (OLS5100 made by Olympus Corp.) in terms of the surface roughness of the porous underlayer. The surface roughness measured is shown in Fig. 14, and relationships between the surface roughness, and the contact angle of the coating film with water and the slide angle of water are shown in Fig. 15 as well.

The thus obtained results are summarized just below. It is here noted that only the results of spray coating are shown in Table 7 to Table 17.

Fig. 7 is indicative of the states of the coating films using the coating composition of Example 1, and

Fig. 8 shows the slide angles of water concerning the coating films formed of the coating compositions according to Examples 1 to 3 and Example 5.

From Fig. 7, it has been confirmed that upon dropwise addition of water droplets onto the glass sheet to which the coating composition of Example 1 is applied by spraying, they slide down, meaning that there is a lubricating surface formed on the glass sheet. From the SEM image, it has been found that the lubricating surface comprises a porous underlayer in a rough state and a liquid film formed thereon. As the solvent is volatile at ordinary temperatures and pressures, the liquid film takes a lubricating liquid form. From this, it has been found that the coating composition of Example 1 is capable of forming a coating film having a lubricating surface for the liquid of interest (here water).

Although not illustrated, it has also been confirmed that water droplets slide down a coating film formed by dip coating. In any of spray coating, and dip coating of the coating compositions of Examples 11 to 18, 21 to 32, 34 to 35 and 39 to 42 on glass sheets, the lubricating surfaces for water droplets were formed.

As shown in Table 4 with reference to the coating composition of Example 1, it has been confirmed that the lubricating liquid or silicone oil 1 has a nonaffinity for the liquid of interest or water, and an affinity for the solvent or isopropanol. The one-part RTV silicone rubber or the binder resin is a chemical substance similar to silicone oil 1, and has an affinity for the lubricating liquid. As well known in the art, isopropanol volatilizes off at ordinary temperatures and pressures.

From comparisons of the results obtained using the compositions of Examples 1 to 5 shown in Fig. 8 and Table 7, it has been understood that the coating composition of Example 1 containing all of the particles, binder resin and lubricating liquid is capable of forming a lubricating surface, but the coating compositions of Examples 2, 3 and 5 comprising only a part of them is incapable of forming any lubricating surface. The coating composition of Example 4 free of any lubricating liquid is a rolling-down surface as is the case with Patent Publication 1. From this, it has been found that the SLIPS film-forming coating composition should comprise essentially of particles, a binder resin, a lubricating liquid, and a solvent.

Fig. 9 is indicative of the contact angle of the lubricating liquid with the substrate formed with the particles of Example 1.

Fig. 9(A) shows a state of a substrate formed with silica nanoparticles 7 seconds after dropwise addition of silicone oil 1 thereon in the atmosphere. It has been ascertained that the final angle of contact is 0° and silicone oil 1 remains stabilized on the silica nanoparticles. Although not illustrated, it has also been confirmed that in the case of the silica nanoparticles of Examples 21 to 25, the final angle of contact is again 0°. Fig. 9(B) shows a state of a substrate formed with silica nanoparticles 7 seconds after dropwise addition of silicone oil 1 thereon in water. It has been ascertained that the final angle of contact is 0° and water is slidable on silicone oil 1.

Although not illustrated, it has been verified that upon dropwise addition of various lubricating liquids onto substrates formed with two kinds of silicone rubbers (silicone resins) shown in the table, the angles of contact were 10° or lower in either case. From this, the lubricating liquids and binder resins indicated would have an affinity for each other.

From comparison of the results obtained using the compositions of Example 1 and 33 to 38 shown Tables 11 and 12, it has been understood that by allowing the compositions containing the particles, binder resin, lubricating liquid, and solvent to satisfy all of the following conditions, it is possible to form a lubricating surface for water:

the lubricating liquid should have a nonaffinity for water, and an affinity for the binder resin;
the solvent should have an affinity for the lubricating liquid;
upon dropwise addition of the lubricating liquid onto a substrate formed with the same material as the nanoparticles in the atmosphere, the final angle of contact should be 0° ; and
upon dropwise addition of the lubricating liquid onto a substrate formed with the same material as the nanoparticles in the liquid of interest (here water), the final angle of contact should be 0° .

Fig. 10 shows states of the coating films formed of the coating compositions according to Examples 10 to 12 and 15.

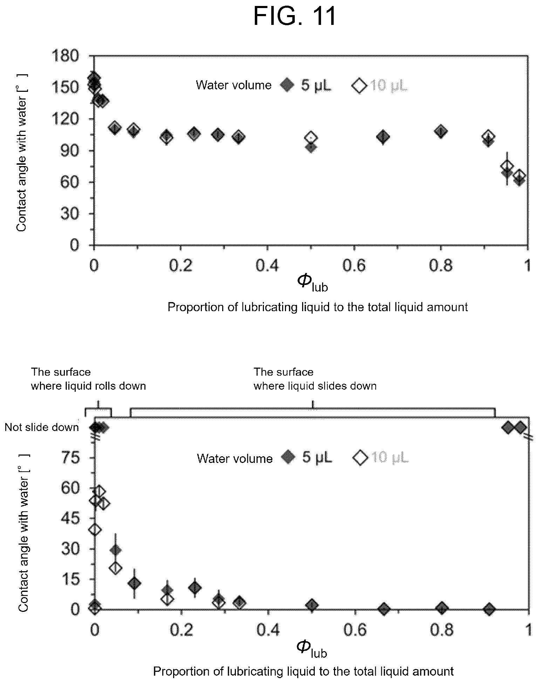

Fig. 11 shows dependencies, on the ratios of the lubricating liquid, of the contact angle of the coating films formed of the coating compositions of Examples 1 and 6 to 20 with water and the angles at which water slides down.

Fig. 12 shows dependencies, on the ratios of the lubricating liquid, of the transmittances of the coating films formed of the coating compositions of Examples 1 and 6 to 20. Note here that data indicated by broken lines stand for the transmittances of uncoated glass substrates or substrates on which the coating compositions are not applied.

According to Fig. 10, it has been found that at a lower volume ratio (proportion) $\varphi_{lub}$ of the lubricating liquid relative to the total amount of liquids in the coating composition (i.e., the total of solvent and lubricating liquid), the porous underlayer remains exposed, and at a higher volume ratio (proportion) $\varphi_{lub}$, the porous underlayer remains covered with a liquid film.

With reference to Fig. 11 and Tables 7 to 11, the results of use of the coating compositions of Examples 1 and 6 to 20 are compared. It has been found that the coating compositions of Examples 1 and 11 to 18 can be used to form coating films having a lubricating surface for the liquid of interest (water here). On the other hand, it has been found that the coating films formed of the coating composition of Example 10 and the coating compositions of Examples 6 to 9 whose volume ratio (proportion) $\varphi_{lub}$ is lower than that fail to provide good enough liquid films, leading to no liquid lubrication. Further, it has been found that the coating films formed of the coating compositions of Examples 19 and 20 whose volume ratio (proportion) $\varphi_{lub}$ of the lubricating liquid is higher, decrease in terms of the density of particles and binder resin, leading to no liquid lubrication whatsoever. From this, it has been appreciated that the volume ratio (proportion) $\varphi_{lub}$ of the lubricating liquid relative to the total amount of solvent and lubricating liquid in the coating composition should satisfy a range of 0.09 to 0.95 inclusive.

Referring again to Fig. 11, coating compositions whose volume ratio (proportion) $\varphi_{lub}$ of the lubricating liquid is less than 0.09 are equivalent to those of Patent Publication 1. As shown in Fig. 12 and indicated in Tables 8 and 9, when coating compositions whose volume ratio (proportion) $\varphi_{lub}$ of the lubricating liquid is less than 0.09 are used, coating films having a contact angle of greater than 130° with water may be formed, but they are incapable of sliding water down. This is because Patent Publication 1 is about rolling-down and different from the liquid lubricating surface technology about sliding-down.

With further reference to Fig. 12 and Tables 7 to 11, it has been found that increases in the volume ratio (proportion) $\varphi_{lub}$ of the lubricating liquid make it possible to obtain a liquid lubricating surface transparent to visible light. From this, it has been understood that when a transparent liquid lubricating surface is in need, the volume ratio (proportion) $\varphi_{lub}$ of the lubricating liquid relative to the total amount of solvent and lubricating liquid in the coating composition should preferably satisfy a range of 0.16 to 0.95 inclusive.

Reference is now made to Table 17 for comparisons of the results of using the coating compositions of Examples 1 and 42 to 44. From the compositions of Examples 1 and 42, it has been found that there can be a coating film with a lubricating surface for the liquid of interest (water here). From the compositions of Examples 43 and 44 whose content of binder resin exceeds 0.05 g/mL, on the other hand, it has been found that the binder resin is detrimental to the fluidity of the lubricating liquid, causing the latter to be incapable of lubrication. From this, it has been found that the content of the binder resin relative to the total amount of lubricating liquid and solvent should satisfy a range of 0.0004 g/mL to 0.05 g/mL inclusive.

Fig. 13 shows the SEM images taken of the porous underlayer of the coating films formed out of the coating compositions according to Examples 1 and 21 to 25.

Fig. 14 shows the surface roughness of the porous underlayers in the coating films formed out of the coating compositions according to Examples 1 and 21 to 25.

According to Fig. 13, it has been found that the underlayers are each defined by a porous underlayer where the nanoparticles are agglutinated together irrespective of their types and sizes, and according to Fig. 14, it has been found that the porous underlayers have a surface roughness ranging from 0.1 $\mu$m to 0.25 $\mu$m inclusive. With reference to Tables 11 to 13, and as shown in the coating compositions of Examples 1 and 21 to 29, it has been found that a coating film having a lubricating surface for the liquid of interest (water here) can be formed irrespective of the types and sizes of particles. Further, it has been found that a coating film having a lubricating surface for water can be formed out of the coating compositions of Examples 1, 40 and 41 irrespective of the content of particles.

Fig. 15 shows dependencies, on the surface roughness of the porous underlayers, of the contact angle of the coating films formed out of the coating compositions according to Examples 1 and 21 to 25 with water, and the water slide angles thereof as well.

Fig. 16 shows dependencies, on the BET specific surface area of particles, of the contact angle of the coating films formed out of the coating compositions according to Examples 1 and 21 to 25 with water, and the water slide angles thereof as well.

Fig. 17 shows dependencies, on the particle diameter (primary particle diameter) of particles, of the water slide angles of the coating films formed out of the coating compositions of Examples 1 and 21 to 25.

According to Fig. 15, it has been found that if the coating compositions of Examples 1 and 21 to 29 are used irrespective of the magnitude of surface roughness of the porous underlayer, it is then possible to form a coating film having a lubricating surface for the liquid of interest (water here).

According to Fig. 16, it has been found that if the coating compositions of Examples 1 and 21 to 29 are used irrespective of the BET specific surface area of particles, it is then possible to form a coating film having a lubricating surface for the liquid of interest (water here).

According to Fig. 17, it has been found that if the coating compositions of Examples 1 and 21 to 29 are used irrespective of the particle diameter of particles, it is then possible to form a coating film having a lubricating surface for the liquid of interest (water here).

Fig. 18 shows the self-restorability of a coating film formed out of the coating composition of Example 1.

According to Fig. 18, it has been found that a scratch imparted on the coating film using the coating composition of Example 1 is substantially restored after the elapse of 2 seconds. Such self-restorability is a phenomenon characteristic of the SLIPS, as well known in the art. This is because even if there is damage to the underlayer comprising nanoparticles, that damage site is covered up by the liquid film so that the coating film can function steadily as the SLIPS. From this, it has also been found that a coating film (SLIPS) having a lubricating surface can be formed by coating without recourse to impregnation.

Table 7

| Component | | | Example 1 | Example 2 | Example 3 | Example 4 | Example 5 |
|---|---|---|---|---|---|---|---|
| Component | Nanoparticles [g] | Hydrophobic silica nanoparticles 1 | 0.08 | 0.08 | | 0.08 | |
| | | Hydrophobic silica nanoparticles 2 | | | | | |
| | | Hydrophobic silica nanaparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | | 0.04 | 0.04 | |
| | | Two-part RTV silicone rubber | | | | | |
| | Solvent [mL] | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

EP 4 474 434 A1

|  |  |  | Example 1 | Example 2 | Example 3 | Example 4 | Example 5 |
|---|---|---|---|---|---|---|---|
| Lubricating Liquid [mL] | | Silicone Oil 1 | 2 | 2 | 2 |  | 2 |
| | | Silicone Oil 2 |  |  |  |  |  |
| | | Oleic Acid |  |  |  |  |  |
| | | Perfluoropolyether |  |  |  |  |  |
| | | Liquid Paraffin |  |  |  |  |  |
| | | Polyethylene Glycol |  |  |  |  |  |
| Lubricating Liquid[mL] /(Total Amount of Lubricating Liquid and Solvent[mL]) $\phi$lub | | | 0.2857 | 0.2857 | 0.2857 | - | 0.2857 |
| Lubricating Liquid [mL]/Solvent[mL] | | | 0.4 | 0.4 | 0.4 | - | 0.4 |
| Nanoparticle[g] /(Total Amount of Lubricating Liquid and Solvent[mL]) [g/mL] | | | 0.0114 | 0.0114 | - | 0.016 | - |
| Binder Resin[g] /(Total Amount of Lubricating Liquid and Solvent[mL] [g/mL] | | | 0.006 | 0.000 | 0.006 | 0.008 | 0.000 |
| Conditions | The lubricating liquid has a nonaffinity for water, and an affinity for the binder resin | | yes | - | yes | - | - |
| | The solvent has an affinity for the lubricating liquid, and is volatile at ordinary temperature and pressure | | yes | yes | yes | - | - |
| | Contact angle is 0° when a drop of the lubricating liquid is added onto the substrate formed with the same material as the nanoparticles in the atmosphere | | yes | yes | - | - | - |
| | Contact angle is 0° when a drop of the lubricating liquid is added onto the substrate formed with the same material as the nanoparticles in water | | yes | yes | - | - | - |
| Estimation | Contact angle with water [°] | | 105.9±2.4 | 107.2±1.5 | 108.4±3.11 | 160.1±4.3 | 77.2±6.0 |
| | Water slide angle [°] | | 5.4±4.4 | × | × | 3.0±2.6 | × |
| | Self-restorability | | ○ | ○ | ○ | × | ○ |
| | Transmittance [%] | | 92.8 | 59.1 | 92.6 | 83.8 | 92.2 |

EP 4 474 434 A1

Table 8

| | | | Example 1 | Example 6 | Example 7 | Example 8 | Example 9 |
|---|---|---|---|---|---|---|---|
| Component | Nanoparticles [g] | Hydrophobic silica nanoparticles 1 | 0.08 | 0.08 | 0.08 | 0.08 | 0.08 |
| | | Hydrophobic silica nanoparticles 2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | 0.04 | 0.04 | 0.04 |
| | | Two-part RTV silicone rubber | | | | | |
| | Solvent [mL] | Isopropanol | 5 | 5 | 5 | 5 | 5 |
| | | Hexane | | | | | |
| | | Ethanol | | | | | |
| | | Dichloropentaftuoropropane | | | | | |
| | | Water (ultrapure water) | | | | | |

| | | | Example 1 | Example 6 | Example 7 | Example 8 | Example 9 |
|---|---|---|---|---|---|---|---|
| Lubricating Liquid [mL] | Silicone Oil 1 | | 2 | 0.001 | 0.01 | 0.05 | 0.1 |
| | Silicone Oil 2 | | | | | | |
| | Oleic Acid | | | | | | |
| | Perfluoropolyether | | | | | | |
| | Liquid Paraffin | | | | | | |
| | Polyethylene Glycol | | | | | | |
| Lubricating Liquid[mL] /(Total Amount of Lubricating Liquid and Solvent[mL]) $\phi$lub | | | 0.2857 | 0.0002 | 0.0020 | 0.0099 | 0.0196 |
| Lubricating Liquid [mL]/Solvent[mL] | | | 0.4 | 0.0002 | 0.002 | 0.01 | 0.02 |
| Nanoparticle[g] /(Total Amount of Lubricating Liquid and Solvent[mL]) [g/mL] | | | 0.0114 | 0.0160 | 0.0160 | 0.0158 | 0.0157 |
| Binder Resin[g] /(Total Amount of Lubricating Liquid and Solvent[mL] [g/mL] | | | 0.006 | 0.008 | 0.008 | 0.008 | 0.008 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 155.3±3.0 | 151.3±2.1 | 139.6±0.8 | 138.3±2.4 |
| | Water slide angle [°] | | 5.4±4.4 | × | × | × | × |
| | Self-restorability | | ○ | × | × | × | × |
| | Transmittance [%] | | 92.8 | 84.2 | 81.9 | 69.0 | 71.9 |

Table 9

| Component | | | Example 1 | Example 10 | Example 11 | Example 12 | Example 13 |
|---|---|---|---|---|---|---|---|
| Nanoparticles [g] | | Hydrophobic silica nanoparticles 1 | 0.08 | 0.08 | 0.08 | 0.08 | 0.08 |
| | | Hydrophobic silica nanoparticles2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| Binder Resin [g] | | One-part RTV silicone rubber | 0.04 | 0.04 | 0.04 | 0.04 | 0.04 |
| | | Two-part RTV silicone rubber | | | | | |
| Solvent [mL] | | Isopropanol | 5 | 5 | 5 | 5 | 5 |
| | | Hexane | | | | | |
| | | Ethanol | | | | | |
| | | Dichlorapentafluoropropane | | | | | |
| | | Water (ultrapure water) | | | | | |

(continued)

| | | | Example 1 | Example 10 | Example 11 | Example 12 | Example 13 |
|---|---|---|---|---|---|---|---|
| Lubricating Liquid [mL] | | Silicone Oil 1 | 2 | 0.25 | 0.5 | 1 | 1.5 |
| | | Silicone Oil 2 | | | | | |
| | | Oleic Acid | | | | | |
| | | Perfluoropolyether | | | | | |
| | | Liquid Paraffin | | | | | |
| | | Polyethylene Glycol | | | | | |
| Lubricating Liquid[mL] /(Total Amount of Lubricating Liquid and Solvent[mL]) $\phi$lub | | | 0.2857 | 0.0476 | 0.0909 | 0.1667 | 0.2308 |
| Lubricating Liquid [mL]/Solvent[mL] | | | 0.4 | 0.05 | 0.1 | 0.2 | 0.3 |
| Nanoparticle[g] /(Total Amount of Lubricating Liquid and Solvent[mL]) [g/mL] | | | 0.0114 | 0.0152 | 0.0145 | 0.0133 | 0.0123 |
| Binder Resin[g] /(Total Amount of Lubricating Liquid and Solvent[mL] [g/mL] | | | 0.006 | 0.008 | 0.007 | 0.007 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 110.0±3.5 | 107.5±3.4 | 104.8±2.7 | 107.2±2.5 |
| | Water slide angle [°] | | 5.4±4.4 | 29.4±8.3 | 12.8±7.4 | 9,6t5,0 | 10.8±5.0 |
| | Self-restorability | | ○ | × | × | △ | ○ |
| | Transmittance [%] | | 92.8 | 40.0 | 40.1 | 72.9 | 89.3 |

Table 10

| | | | Example 1 | Example 14 | Example 15 | Example 16 | Example 17 |
|---|---|---|---|---|---|---|---|
| Component | Nanoparticles [g] | Hydrophobic silica nanoparticles 1 | 0.08 | 0.08 | 0.08 | 0.08 | 0.08 |
| | | Hydrophobic silica nanoparticles 2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | 0.04 | 0.04 | 0.04 |
| | | Two-part RTV silicone rubber | | | | | |
| | Solvent [mL] | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

EP 4 474 434 A1

27

(continued)

| | | | Example 1 | Example 14 | Example 15 | Example 16 | Example 17 |
|---|---|---|---|---|---|---|---|
| Lubricating Liquid [mL] | Silicone Oil 1 | | 2 | 2.5 | 5 | 10 | 20 |
| | Silicone Oil 2 | | | | | | |
| | Oleic Acid | | | | | | |
| | Perfluoropolyether | | | | | | |
| | Liquid Paraffin | | | | | | |
| | Polyethylene Glycol | | | | | | |
| Lubricating Liquid[mL] /(Total Amount of Lubricating Liquid and Solvent[mL]) $\phi$plub | | | 0.2857 | 0.3333 | 0.5 | 0.6667 | 0.8 |
| Lubricating Liquid [mL]/Solvent[mL] | | | 0.4 | 0.5 | 1 | 2 | 4 |
| Nanoparticle[g] /(Total Amount of Lubricating Liquid and Solvent[mL]) [g/mL] | | | 0.0114 | 0.0107 | 0.0080 | 0.0053 | 0.0032 |
| Binder Resin[g] /(Total Amount of Lubricating Liquid and Solvent[mL] [g/mL] | | | 0.006 | 0.005 | 0.004 | 0.003 | 0.002 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 101.5±4.4 | 93.4±1.3 | 102.1±6.8 | 107 t 2.6 |
| | Water slide angle [°] | | 5.4±4.4 | 4.2±1.9 | 2.2±0.4 | 0.2±0.4 | 0.6±0.5 |
| | Self-restorability | | ○ | ○ | ○ | ○ | ○ |
| | Transmittance [%] | | 92.8 | 93.4 | 93.7 | 91.6 | 92.4 |

Table 11

| Component | Nanoparticles [g] | Hydrophobic silica nanoparticles 1 | 0.08 | 0.08 | 0.08 | 0.08 | |
|---|---|---|---|---|---|---|---|
| | | | Example 1 | Example 18 | Example 19 | Example 20 | Example 21 |
| | | Hydrophobic silica nanoparticles 1 | 0.08 | 0.08 | 0.08 | 0.08 | |
| | | Hydrophobic silica nanoparticles 2 | | | | | 0.08 |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 5 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | 0.04 | 0.04 | 0.04 |
| | | Two-part RTV silicone rubber | | | | | |
| | Solvent [mL] | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

(continued)

| | | | Example 1 | Example 18 | Example 19 | Example 20 | Example 21 |
|---|---|---|---|---|---|---|---|
| Lubricating Liquid [mL] | Silicone Oil 1 | | 2 | 50 | 100 | 250 | 2 |
| | Silicone Oil 2 | | | | | | |
| | Oleic Acid | | | | | | |
| | Perfluoropolyether | | | | | | |
| | Liquid Paraffin | | | | | | |
| | Polyethylene Glycol | | | | | | |
| Lubricating Liquid[mL] /(Total Amount of Lubricating Liquid and Solvent[mL]) $\phi$lub | | | 0.2857 | 0.9091 | 0.9524 | 0.9804 | 0.2857 |
| Lubricating Liquid [mL]/Solvent[mL] | | | 0.4 | 10 | 20 | 50 | 0.4 |
| Nanoparticle[g] /(Total Amount of Lubricating Liquid and Solvent[mL]) [g/mL] | | | 0.0114 | 0.0015 | 0.0008 | 0.0003 | 0.0114 |
| Binder Resin[g] /(Total Amount of Lubricating Liquid and Solvent[mL] [g/mL] | | | 0.006 | 0.001 | 0.00038 | 0.00016 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 98.8t 5.1 | 69.1±12.1 | 61.6±4.1 | 107.3±2.0 |
| | Water slide angle [°] | | 5.4±4.4 | 0.2±0.4 | × | × | 1.0±0.8 |
| | Self-restorability | | ○ | ○ | ○ | ○ | ○ |
| | Transmittance [%] | | 92.8 | 90.1 | 92.2 | 92.2 | 86.2 |

Table 12

| | | | Example 1 | Example 22 | Example 23 | Example 24 | Example 25 |
|---|---|---|---|---|---|---|---|
| Component | Nanoparticles [g] | Hydrophobic silica nanoparticles 1 | 0.08 | | | | |
| | | Hydrophobic silica nanoparticles 2 | | | | | |
| | | Hydrophobic silica nanoparticles 2 | | 0.08 | | | |
| | | Hydrophobic silica nanoparticles 4 | | | 0.08 | | |
| | | Hydrophobic silica nanoparticles 5 | | | | 0.08 | |
| | | Hydrophobic silica nanoparticles 6 | | | | | 0.08 |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | 0.04 | 0.04 | 0.04 |
| | | Two-part RTV silicone rubber | | | | | |
| | Solvent [mL] | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

|  |  |  | Example 1 | Example 22 | Example 23 | Example 24 | Example 25 |
|---|---|---|---|---|---|---|---|
| Lubricating Liquid [mL] | | Silicone Oil 1 | 2 | 2 | 2 | 2 | 2 |
| | | Silicone Oil 2 | | | | | |
| | | Oleic Acid | | | | | |
| | | Perfluoropolyether | | | | | |
| | | Liquid Paraffin | | | | | |
| | | Polyethylene Glycol | | | | | |
| Lubricating Liquid[mL] /(Total Amount of Lubricating Liquid and Solvent[mL]) $\phi$lub | | | 0.2857 | 0.2857 | 0.2857 | 0.2857 | 0.2857 |
| Lubricating Liquid [mL]/Solvent[mL] | | | 0.4 | 0.4 | 0.4 | 0.4 | 0.4 |
| Nanoparticle[g] /(Total Amount of Lubricating Liquid and Solvent[mL]) [g/mL] | | | 0.0114 | 0.0114 | 0.0114 | 0.0114 | 0.0114 |
| Binder Resin[g] /(Total Amount of Lubricating Liquid and Solvent[mL] [g/mL] | | | 0.006 | 0.006 | 0.006 | 0.006 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 107.1±6..0 | 106.1±4.8 | 107.2±2.9 | 107.9±0.1 |
| | Water slide angle [°] | | 5.4±4.4 | 2.4±0.8 | 1.7±0.5 | 2.1±1.9 | 0.7±0.5 |
| | Self-restorability | | ○ | ○ | ○ | ○ | ○ |
| | Transmittance [%] | | 92.8 | 71.8 | 91.3 | 90.7 | 91.5 |

EP 4 474 434 A1

Table 13

| Component | | | Example 1 | Example 26 | Example 27 | Example 28 | Example 29 |
|---|---|---|---|---|---|---|---|
| Nanoparticles [g] | | Hydrophobic silica nanoparticles 1 | 0.08 | | | | |
| | | Hydrophobic silica nanoparticles 2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | 0.08 | | | |
| | | Hydrophilic silica nanoparticles 2 | | | 0.08 | | |
| | | Hydrophilic alumina nanoparticles | | | | 0.08 | |
| | | Hydrophobic titania nanoparticles | | | | | 0.08 |
| Binder Resin [g] | | One-part RTV silicone rubber | 0.04 | 0.04 | 0.04 | 0.04 | 0.04 |
| | | Two-part RTV silicone rubber | | | | | |
| Solvent [mL] | | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

| | | | Example 1 | Example 26 | Example 27 | Example 28 | Example 29 |
|---|---|---|---|---|---|---|---|
| Lubricating Liquid [mL] | | Silicone Oil 1 | 2 | 2 | 2 | 2 | 2 |
| | | Silicone Oil 2 | | | | | |
| | | Oleic Acid | | | | | |
| | | Perfluoropolyether | | | | | |
| | | Liquid Paraffin | | | | | |
| | | Polyethylene Glycol | | | | | |
| Lubricating Liquid[mL] /(Total Amount of Lubricating Liquid and Solvent[mL]) $\phi$lub | | | 0.2857 | 0.2857 | 0.2857 | 0.2857 | 0.2857 |
| Lubricating Liquid [mL]/Solvent[mL] | | | 0.4 | 0.4 | 0.4 | 0.4 | 0.4 |
| Nanoparticle[g] /(Total Amount of Lubricating Liquid and Solvent[mL)) [g/mL] | | | 0.0114 | 0.0114 | 0.0114 | 0.0000 | 0.0000 |
| Binder Resin[g] /(Total Amount of Lubricating Liquid and Solvent[mL] [g/mL] | | | 0.006 | 0.006 | 0.006 | 0.006 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 109.2±2.4 | 111.3±1.7 | 108.1±1.3 | 109.3±1.8 |
| | Water slide angle [°] | | 5.4±4.4 | 2.8±2.6 | 1.0±0.8 | 6.4±2.1 | 2.6±0.9 |
| | Self-restorability | | ○ | ○ | ○ | ○ | ○ |
| | Transmittance [%] | | 92.8 | 68.3 | 64.0 | 40.9 | 37.9 |

34

Table 14

| | | | Example 1 | Example 30 | Example 31 | Example 32 | Example 33 |
|---|---|---|---|---|---|---|---|
| Component | Nanoparticles [g] | Hydrophobic silica nanoparticles 1 | 0.08 | 0.08 | 0.08 | 0.08 | 0.08 |
| | | Hydrophobic silica nanoparticles 2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | 0.04 | 0.04 | 0.04 |
| | | Two-part RTV silicone rubber | | | | | |
| | Solvent [mL] | Isopropanol | 5 | | | | |
| | | Hexane | | 5 | | | |
| | | Ethanol | | | 5 | | |
| | | Dichloropentafluoropropane | | | | 5 | |
| | | Water (ultrapure water) | | | | | 5 |

(continued)

| | | | Example 1 | Example 30 | Example 31 | Example 32 | Example 33 |
|---|---|---|---|---|---|---|---|
| Lubricating Liquid [mL] | Silicone Oil 1 | | 2 | 2 | 2 | 2 | 2 |
| | Silicone Oil 2 | | | | | | |
| | Oleic Acid | | | | | | |
| | Perfluoropolyether | | | | | | |
| | Liquid Paraffin | | | | | | |
| | Polyethylene Glycol | | | | | | |
| Lubricating Liquid[mL] /(Total Amount of Lubricating Liquid and Solvent[mL)) $\phi$lub | | | 0.2857 | 0.2857 | 0.2857 | 0.2857 | 0.2857 |
| Lubricating Liquid [mL]/Solvent[mL] | | | 0.4 | 0.4 | 0.4 | 0.4 | 0.4 |
| Nanoparticle[g] /(Total Amount of Lubricating Liquid and Solvent[mL]) [g/mL] | | | 0.0114 | 0.0114 | 0.0114 | 0.0114 | 0.0114 |
| Binder Resin[g] /(Total Amount of Lubricating Liquid and Solvent[mL] [g/mL] | | | 0.006 | 0.006 | 0.006 | 0.006 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | yes | no |
| | Contact angle is 0° when a drop of the lubricating liquid is added onto the substrate formed with the same material as the nanoparticles in the atmosphere | | yes | yes | yes | yes | yes |
| | Contact angle is 0° when a drop of the lubricating liquid is added onto the substrate formed with the same material as the nanoparticles in water | | yes | yes | yes | yes | yes |
| Estimation | Contact angle with water [°] | | 105.9±2.4 | 108.9±0.8 | 110.3±1.9 | 108.1±0.3 | 90.4±4.6 |
| | Water slide angle [°] | | 5.4±4.4 | 4.0±0.8 | 7.8±1.8 | 4.2±0.4 | × |
| | Self-restorability | | ○ | ○ | △ | ○ | ○ |
| | Transmittance [%] | | 92.8 | 76.3 | 60.2 | 81.4 | 88.8 |

36

EP 4 474 434 A1

Table 15

| Component | | Example 1 | Example 34 | Example 35 | Example 36 | Example 37 |
|---|---|---|---|---|---|---|
| Nanoparticles [g] | Hydrophobic silica nanoparticles 1 | 0.08 | 0.08 | 0.08 | 0.08 | 0.08 |
| | Hydrophobic silica nanoparticles 2 | | | | | |
| | Hydrophobic silica nanoparticles 3 | | | | | |
| | Hydrophobic silica nanoparticles 4 | | | | | |
| | Hydrophobic silica nanoparticles 5 | | | | | |
| | Hydrophobic silica nanoparticles 6 | | | | | |
| | Hydrophilic silica nanoparticles 1 | | | | | |
| | Hydrophilic silica nanoparticles 2 | | | | | |
| | Hydrophilic alumina nanoparticles | | | | | |
| | Hydrophobic titania nanoparticles | | | | | |
| Binder Resin [g] | One-part RTV silicone rubber | 0.04 | 0.04 | 0.04 | 0.04 | 0.04 |
| | Two-part RTV silicone rubber | | | | | |
| Solvent [mL] | Isopropanol | 5 | 5 | 5 | 5 | 5 |
| | Hexane | | | | | |
| | Ethanol | | | | | |
| | Dichloropentafluoropropane | | | | | |
| | Water (ultrapure water) | | | | | |

(continued)

| | | | Example 1 | Example 34 | Example 35 | Example 36 | Example 37 |
|---|---|---|---|---|---|---|---|
| Lubricating Liquid [mL] | Silicone Oil 1 | | 2 | | | | |
| | Silicone Oil 2 | | | 2 | | | |
| | Oleic Acid | | | | 2 | | |
| | Perfluoropolyether | | | | | 2 | |
| | Liquid Paraffin | | | | | | 2 |
| | Polyethylene Glycol | | | | | | |
| Lubricating Liquid[mL] /(Total Amount of Lubricating Liquid and Solvent(mL)) $\phi$lub | | | 0.2857 | 0.2857 | 0.2857 | 0.2857 | 0.2857 |
| Lubricating Liquid [mL]/Solvent[mL] | | | 0.4 | 0.4 | 0.4 | 0.4 | 0.4 |
| Nanoparticle[g] /(Total Amount of Lubricating Liquid and Solvent[mL]) [g/mL] | | | 0.0114 | 0.0114 | 0.0114 | 0.0114 | 0.0114 |
| Binder Resin[g] /(Total Amount of Lubricating Liquid and Solvent[mL] [g/mL] | | | 0.006 | 0.006 | 0.006 | 0.006 | 0.006 |
| Conditions | The lubricating liquid has a nonaffinity for water, and an affinity for the binder resin | | yes | yes | yes | yes | yes |
| | The solvent has an affinity for the lubricating liquid, and is volatile at ordinary temperature and pressure | | yes | yes | yes | no | no |
| | Contact angle is 0° when a drop of the lubricating liquid is added onto the substrate formed with the same material as the nanoparticles in the atmosphere | | yes | yes | yes | yes | no |
| | Contact angle is 0° when a drop of the lubricating liquid is added onto the substrate formed with the same material as the nanoparticles in water | | yes | yes | yes | yes | no |
| Estimation | Contact angle with water [°] | | 105.9±2.4 | 107.8±6.1 | 85.7±2.5 | 50.6±5.3 | 111.4±2.7 |
| | Water slide angle [°] | | 5.4±4.4 | 3.8±1.1* | 4.0±3.8 | × | × |
| | Self-restorability | | ○ | ○ | ○ | ○ | ○ |
| | Transmittance [%] | | 92.8 | 62.2 | 63.2 | 84.2 | 58.8 |

Table 16

| | | | Example 1 | Example 38 | Example 39 | Example 40 | Example 41 |
|---|---|---|---|---|---|---|---|
| Component | Nanoparticles [g] | Hydrophobic silica nanoparticles 1 | 0.08 | 0.08 | 0.08 | 0.2 | 0.3 |
| | | Hydrophobic silica nanoparticles 2 | | | | | |
| | | Hydrophobic silica nanoparticles 3 | | | | | |
| | | Hydrophobic silica nanoparticles 4 | | | | | |
| | | Hydrophobic silica nanoparticles 5 | | | | | |
| | | Hydrophobic silica nanoparticles 6 | | | | | |
| | | Hydrophilic silica nanoparticles 1 | | | | | |
| | | Hydrophilic silica nanoparticles 2 | | | | | |
| | | Hydrophilic alumina nanoparticles | | | | | |
| | | Hydrophobic titania nanoparticles | | | | | |
| | Binder Resin [g] | One-part RTV silicone rubber | 0.04 | 0.04 | | 0.04 | 0.04 |
| | | Two-part RTV silicone rubber | | | 0.044 | | |
| | Solvent [mL] | Isopropanol | 5 | 5 | 5 | 5 | 5 |
| | | Hexane | | | | | |
| | | Ethanol | | | | | |
| | | Dichloropentafluoropropane | | | | | |
| | | Water (ultrapure water) | | | | | |

| | | | Example 1 | Example 38 | Example 39 | Example 40 | Example 41 |
|---|---|---|---|---|---|---|---|
| Lubricating Liquid [mL] | | Silicone Oil 1 | 2 | | 2 | 2 | 2 |
| | | Silicone Oil 2 | | | | | |
| | | Oleic Acid | | | | | |
| | | Perfluoropolyether | | | | | |
| | | Liquid Paraffin | | | | | |
| | | Polyethylene Glycol | | 2 | | | |
| Lubricating Liquid[mL] /(Total Amount of Lubricating Liquid and Solvent[mL]) $\phi$lub | | | 0.2857 | 0.2857 | 0.2857 | 0.2857 | 0.2857 |
| Lubricating Liquid [mL]/Solvent[mL] | | | 0.4 | 0.4 | 0.4 | 0.4 | 0.4 |
| Nanoparticle[g] /(Total Amount of Lubricating Liquid and Solvent[mL]) [g/mL] | | | 0.0114 | 0.0114 | 0.0114 | 0.0286 | 0.0429 |
| Binder Resin[g] /(Total Amount of Lubricating Liquid and Solvent[mL] [g/mL] | | | 0.006 | 0.006 | 0.006 | 0.006 | 0.006 |
| Conditions | The lubricating liquid has a nonaffinity for water, and an affinity for the binder resin | | yes | no | yes | yes | yes |
| | The solvent has an affinity for the lubricating liquid, and is volatile at ordinary temperature and pressure | | yes | yes | yes | yes | yes |
| | Contact angle is 0° when a drop of the lubricating liquid is added onto the substrate formed with the same material as the nanoparticles in the atmosphere | | yes | no | yes | yes | yes |
| | Contact angle is 0° when a drop of the lubricating liquid is added onto the substrate formed with the same material as the nanoparticles in water | | yes | no | yes | yes | yes |
| Estimation | Contact angle with water [°] | | 105.9±2.4 | 13.9±3.5 | 109±1.1 | 106.8±1.3 | 107±1.8 |
| | Water slide angle [°] | | 5.4±4.4 | × | 19.8±0.8 | 11.6±3 | 27.8±4.9 |
| | Self-restorability | | ○ | ○ | ○ | ○ | ○ |
| | Transmittance [%] | | 92.8 | 80.4 | 66.2 | 64.8 | 41.7 |

EP 4 474 434 A1

40

Table 17

| | | | Example 1 | Example 42 | Example 43 | Example 44 |
|---|---|---|---|---|---|---|
| Component | Nanoparticles [g] | Hydrophobic silica nanoparticles 1 | 0.08 | 0.08 | 0.08 | 0.08 |
| | | Hydrophobic silica nanoparticles 2 | | | | |
| | | Hydrophobic silica nanoparticles 3 | | | | |
| | | Hydrophobic silica nanoparticles 4 | | | | |
| | | Hydrophobic silica nanoparticles 5 | | | | |
| | | Hydrophobic silica nanoparticles 6 | | | | |
| | | Hydrophilic silica nanoparticles 1 | | | | |
| | | Hydrophilic silica nanoparticles 2 | | | | |
| | | Hydrophilic alumina nanoparticles | | | | |
| | | Hydrophobic titania nanoparticles | | | | |
| | Binder Resin [g] | One-part RTV silicone rubber | 0.04 | 0.2 | 0.4 | 2 |
| | | Two-part RTV silicone rubber | | | | |
| | Solvent [mL] | Isopropanol | 5 | 5 | 5 | 5 |
| | | Hexane | | | | |
| | | Ethanol | | | | |
| | | Dichloropentafluoropropane | | | | |
| | | Water (ultrapure water) | | | | |
| | Lubricating Liquid [mL] | Silicone Oil 1 | 2 | 2 | 2 | 2 |
| | | Silicone Oil 2 | | | | |
| | | Oleic Acid | | | | |
| | | Perfluoropolyether | | | | |
| | | Liquid Paraffin | | | | |
| | | Polyethylene Glycol | | | | |
| Lubricating Liquid[mL] /(Total Amount of Lubricating Liquid and Solvent[mL]) $\phi$lub | | | 0.2857 | 0.2857 | 0.2857 | 0.2857 |
| Lubricating Liquid [mL]/Solvent[mL] | | | 0.4 | 0.4 | 0.4 | 0.4 |
| Nanoparticle[g] /(Total Amount of Lubricating Liquid and Solvent[mL]) [g/mL] | | | 0.0114 | 0.0114 | 0.0114 | 0.0114 |
| Binder Resin[g] /(Total Amount of Lubricating Liquid and Solvent[mL] [g/mL] | | | 0.006 | 0.029 | 0.057 | 0.286 |

(continued)

| | | Example 1 | Example 42 | Example 43 | Example 44 |
|---|---|---|---|---|---|
| Conditions | The lubricating liquid has a nonaffinity for water, and an affinity for the binder resin | yes | yes | yes | yes |
| | The solvent has an affinity for the lubricating liquid, and is volatile at ordinary temperature and pressure | yes | yes | yes | yes |
| | Contact angle is 0° when a drop of the lubricating liquid is added onto the substrate formed with the same material as the nanoparticles in the atmosphere | yes | yes | yes | yes |
| | Contact angle is 0° when a drop of the lubricating liquid is added onto the substrate formed with the same material as the nanoparticles in water | yes | yes | yes | yes |
| Estimation | Contact angle with water [°] | 105.9±2.4 | 107.5±2.5 | 110.3±2.1 | 108.1±1.5 |
| | Water slide angle [°] | 5.4±4.4 | 8.2±2.6 | - | - |
| | Self-restorability | ○ | ○ | × | × |
| | Transmittance [%] | 92.8 | 94.6 | 95.3 | 92.4 |

Example 45

In Example 45, the coating composition of Example 34 was spray-coated on a glass sheet to make a study of liquid lubrication of the resulting coating film comprising a porous underlayer formed of hydrophobic silica nanoparticles and a liquid film of silicone oil 2 formed on its surface.

The liquid of interest included, in addition to ultrapure water (72.75 mN/m) used in Example 34, perfluoropolyether (20 mN/m), ethanol (22.55 mN/m), acetone (23.30 mN/m), oleic acid (31.92 mN/m), polyethylene glycol (43.8 mN/m), glycerol (63.40 mN/m), isopropanol (21.79 mN/m), n-hexadecane (28.12 mN/m), and toluene (28.53 mN/m). The bracketed numerical values are the surface tensions of the respective liquids. The liquid of interest (5 $\mu$ L) was dropwise added onto the coating film to make an estimation of how the liquid droplets were deflected when they slide down.

More specifically, the film-applied glass sheet was inclined to measure the forward and receding contact angles of liquid droplets (contact angle hysteresis) when they slid down. The results are shown in Fig. 19.

Fig. 19 shows relationships between the contact angle hysteresis and surface tensions of the coating film formed out of the coating composition of Example 34 to various liquids.

When the liquid of interest has an affinity for silicone oil 2 as shown in Table 4, the droplets cannot slide down. According to Table 4, droplets of isopropanol, n-hexadecane, and toluene, because of having an affinity for silicone oil 2, did not slide down even when the coating film tilted actually. On the other hand, droplets of other liquids as shown in Table 4, because of having a nonaffinity for silicone oil 2, slid down when the coating film tilted actually. Affinity or nonaffinity of silicone oil 2 for the respective liquids were also in coincidence with the results of judgement by the Hansen sphere of the Hansen solubility parameter of silicone oil 2.

As further indicated in Fig. 19, the smaller the contact angle hysteresis, the more repellent the droplets were to and, hence, they slid down. From this, it has been found that if the droplets have a nonaffinity for silicone oil 2, they can be well repelled irrespective of surface tension. It has also been found that if the coating composition of the invention is used, it is then possible to form a liquid-repellent coating film for even a liquid having too small surface tension to render repellence generally difficult, by virtue of selection and design of compositions.

Example 46

In Example 46, the liquid lubrication of the coating film obtained by spray coating of the coating composition of Example 34 onto a glass sheet was studied in terms of liquid lubrication for various liquids of interest, for which acetone, glycerol, and perfluoroether were used.

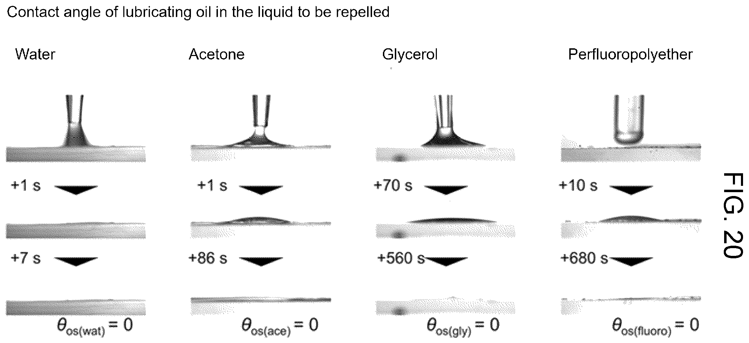

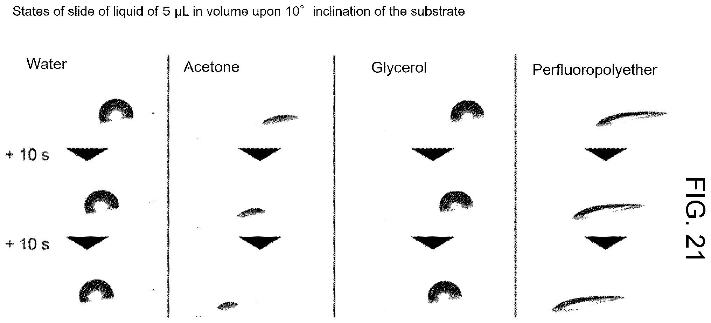

First of all, a substrate formed with the silica nanoparticles of Example 34 was provided to study the contact angle of silicone oil 2 with the substrate in various liquids of interest. The results are shown in Fig. 20. Then, in what state droplets of the liquid of interest slid down the coating film formed out of the coating composition of Example 34 was observed upon dropwise addition. The results are shown in Fig. 21.

Fig. 20 shows the contact angle of the substrate formed with the particles of Example 34 with a lubricating liquid.

Fig. 20 shows states of silicone oil 2 added dropwise onto the substrate formed with silica nanoparticles after the elapse of predetermined times in various liquids of interest. Fig. 20 also shows the results of using water as the liquid of interest, as shown in Fig. 9(B). It has been confirmed that although there is a difference in terms of elapsed time, the final angle of contact is 0° whatever the case may be, and that acetone, glycerol, and perfluoroether can slide on silicone oil 2. According to Table 4, it has been ascertained that acetone, glycerol, and perfluoroether has a nonaffinity for silicone oil 2.

Fig. 21 shows in what state the liquid of interest slides down the coating film formed out of the coating composition of Example 34.

From Fig. 21, it has been found that any of the liquids of interest can slide down at an angle of inclination of 10° of the coating film.

Example 47

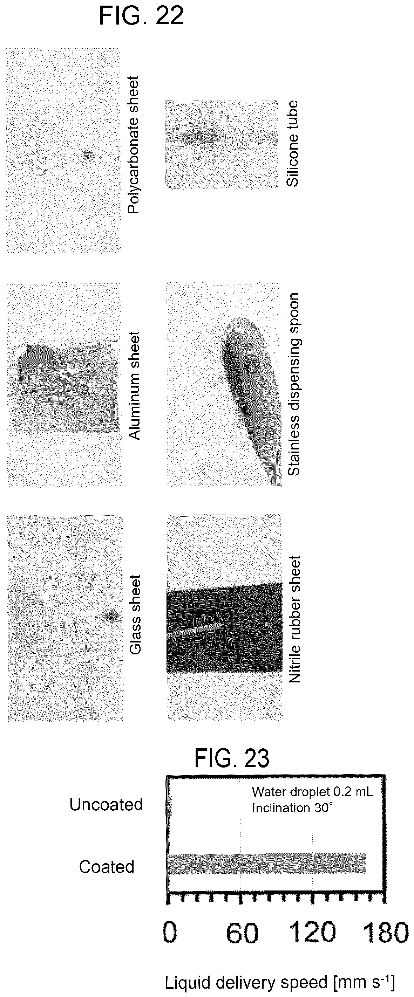

In Example 47, the coating composition of Example 1 was coated by dipping or spraying onto a variety of articles to form coating films, and in what state water droplets slid down was studied. As the article used here was made of an aluminum sheet (having a size of 300 × 300 × 0.8 mm, and made by Hikari Co., Ltd.), a polycarbonate sheet (having a size of 100×100×2.0 mm, and made by C.I. TAKIRON Corporation), a nitrile rubber sheet with no brand name (having a size of 200×1500×1 mm, and available from MonotaRO Co. Ltd.), and a silicone tube (having an outer diameter of 5 mm × an inner diameter of 3 mm and a length of 10 meters, and made by AS ONE CORPORATION). The results are shown in Fig. 22.

Fig. 22 shows the liquid lubrication of the coating film comprising the coating composition of Example 1 and formed on a variety of articles together with the results of using the glass sheet shown in Example 1.

Fig. 23 shows changes in the delivery speed of liquid through the silicone tube.

As shown in Fig. 22, it has been found that water droplets slide down all the sheetlike articles. Although water droplets on the silicone tube are dingily indicated on a gray scale, it has been confirmed that as the silicone tube tilts, the water droplet slide down. From this, it has been shown that the coating compositions of the invention can be applied onto articles formed out of various materials in various shapes.

According to Fig. 23, it has been shown that there are drastic improvements in the delivery speed of water droplets flowing through the silicone tube by allowing it to have a coating film. From this, it has been found that if the coating composition of the invention is applied into tubes used for injection, IV or the like, it is advantageous for medical fluid delivery, contributing more to the medical field.

Example 48

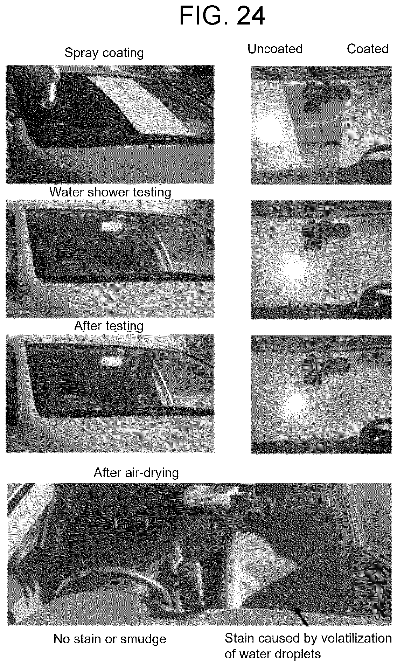

In Example 48, the coating composition of Example 1 was spray-coated as washer fluid onto a window of an automobile for estimation of its liquid lubrication. More specifically, the coating composition of Example 1 was spray-coated onto the car's window, and then subjected to shower testing, followed by drying. At this time, the states of the window in the respective conditions were observed. The results are shown in Fig. 24.

Fig. 24 shows how the shower testing varies due to the presence or absence of the coating film on the car window.

From Fig. 24 showing the post-spray coating state, it has been found that there is good enough visibility maintained upon water shower, and that upon and after water shower testing, water droplets slid down to maintain good enough visibility in the presence of the coating film, but they remain sticking to the window in the absence of the coating liquid, resulting in poor visibility. Further, after drying, a stain caused by water droplets remained in the absence of the coating film, but it did not remain in the presence of the coating film. From the foregoing, it has been shown that the coating composition of the invention provides an effective washer liquid.

Example 49

In Example 49, the lubrication of the coating films formed out of the compositions of Example 1 and 30 to 38 for a variety of liquids of interest was studied. Each coating composition was spray-coated onto a glass sheet to form a coating film. The liquid of interest (5 $\mu$L) was dropwise added onto the coating film, and whether the liquid droplets did or did not slide down was studied upon 40° and 10° inclination of the film-coated glass sheet. The results are shown in Table 18.

Table 18

| Composition | Liquid of Interest | The lubricating liquid has a nonaffinity for the liquid of interest | The solvent has an affinity for the lubricating liquid | Slide down upon 40° inclination | Slide down upon 10° inclination |
|---|---|---|---|---|---|
| Example 1 | Water | Yes | Yes | Yes | Yes |
| Example 34 | Water | Yes | Yes | Yes | Yes |
| Example 35 | Water | Yes | Yes | Yes | Yes |
| Example 36 | Water | Yes | No | No | No |
| Example 37 | Water | Yes | No | No | No |
| Example 38 | Water | No | Yes | No | No |
| Example 30 | Water | Yes | Yes | Yes | Yes |
| Example 31 | Water | Yes | Yes | Yes | Yes |
| Example 32 | Water | Yes | Yes | Yes | Yes |
| Example 33 | Water | Yes | No | No | No |
| Example 34 | Perfluoropolyether | Yes | Yes | Yes | Yes |
| Example 34 | Ethanol | Yes | Yes | Yes | Yes |
| Example 34 | Acetone | Yes | Yes | Yes | Yes |
| Example 34 | Oleic acid | Yes | Yes | Yes | Yes |
| Example 34 | Polyethylene glycol | Yes | Yes | Yes | Yes |
| Example 34 | Glycerol | Yes | Yes | Yes | Yes |
| Example 34 | Isopropanol | No | Yes | No | No |
| Example 34 | Hexadecane | No | Yes | No | No |
| Example 34 | Toluene | No | Yes | No | No |
| Example 1 | Acetone | No | Yes | No | No |
| Example 1 | Oleic acid | No | Yes | No | No |
| Example 1 | Ethanol | No | Yes | No | No |
| Example 1 | Glycerol | Yes | Yes | Yes | Yes |

Table 18 indicates that the coating film formed out of the coating composition of Example 1 can impart lubricity to water and glycerol, but cannot do to acetone, oleic acid and ethanol. The coating film formed out of the coating composition of Example 34 can impart lubricity to water, ethanol, acetone, oleic acid, polyethylene glycol, and glycerol, but cannot do to isopropanol, hexadecane, and toluene. Thus, it has been shown that by suitable selection of lubricating liquids and solvents, it is possible to design compositions for formation of coating films capable of imparting lubricity to a variety of liquids.

Industrial Applicability

Unlike the prior art, the coating compositions of the invention can produce a coating film having a lubricating surface by means of coating; they have widespread usefulness. The coating compositions of the invention can be used more comprehensively than ever before, because they can be coated by conventional coating methods to form a lubricating surface on any desired article having any desired shape.

Explanation of the Reference Numerals

    410: Article
    420: Porous Underlayer

430: Liquid Film
440, 510, 610: Coating Film Having a Lubricating Surface

**Claims**

1.  A coating composition for forming a coating film having a lubricating surface for a liquid of interest, containing:

    particles,
    a binder resin for fixedly binding said particles together,
    a lubricating liquid that has a nonaffinity for said liquid of interest, but has an affinity for said binder resin, and
    a solvent that has an affinity for said lubricating liquid,
    wherein said lubricating liquid has a contact angle of 0° upon dropwise addition onto a substrate made of the same material as said particles as measured in the atmosphere, and a contact angle of 0° upon dropwise addition onto the substrate made of the same material as said particles as measured in said liquid of interest,
    a volume ratio of said lubricating liquid relative to a total amount of said solvent and said lubricating liquid ranges from 0.09 to 0.95 inclusive, and
    a content of said binder resin relative to the total amount of said solvent and said lubricating liquid ranges from 0.0004 g/mL to 0.05 g/mL inclusive.

2.  The coating composition according to claim 1, wherein coordinates for the Hansen solubility parameter of said solvent is located within a Hansen sphere with the coordinates for the Hansen solubility parameter of said solvent as center, and the coordinates for the Hansen solubility parameter of said liquid of interest is located outside the Hansen sphere with the coordinates for the Hansen solubility parameter of said lubricating liquid as center.

3.  The coating composition according to claim 1 or 2, wherein the content of said particles relative to the total amount of said solvent and said lubricating liquid may range from 0.001 g/mL to 0.1 g/mL inclusive.

4.  The coating composition according to claim 1 or 2, wherein a content of said particles relative to the total amount of said solvent and said lubricating liquid ranges from 0.005 g/mL to 0.05 g/mL inclusive.

5.  The coating composition according to any one of claims 1 to 4, wherein a content of said binder relative to the total amount of said solvent and said lubricating liquid ranges from 0.0006 g/mL to 0.03 g/mL inclusive.

6.  The coating composition according to any one of claims 1 to 5, wherein a volume ratio of said lubricating liquid relative to the total amount of said solvent and said lubricating liquid ranges from 0.6 to 0.92 inclusive.

7.  The coating composition according to any one of claims 1 to 6, wherein said particles have a particle diameter ranging from 3 nm to 300 nm inclusive.

8.  The coating composition according to any one of claims 1 to 7, wherein said particles are composed of at least one material selected from the group consisting of an inorganic material, an organic material, or a combination thereof.

9.  The coating composition according to any one of claims 1 to 8, where said binder resin is at least one selected from the group consisting of a silicone resin, a fluororesin, an epoxy resin, a urethane resin, an olefin resin, an acrylic resin, an ethylene-vinyl acetate copolymer (EVA), and a polyvinyl butyral resin (PVB).

10. The coating composition according to any one of claims 1 to 9, wherein said lubricating liquid is at least one selected from the group consisting of a silicone oil, a mineral oil, a vegetable oil, an animal oil, a heavy oil, a resin, a wax, a fluorine oil, an ionic liquid, and a liquid metal.

11. The coating composition according to any one of claims 1 to 10, wherein said solvent is volatile at ordinary temperature and pressure.

12. The coating composition according to any one of claims 1 to 11, wherein said solvent is at least one selected from the group consisting of water, an organic solvent, a low molecular liquid, or a mixture thereof.

13. The coating composition according to any one of claims 1 to 12, wherein:

said liquid of interest is water,

said particles is at least one selected from the group consisting of a silica particle, an alumina particle, a titania particle, and a zirconia particle,

said binder resin is a room temperature-cured type silicone resin,

said lubricating liquid is a silicone oil and/or a fatty acid, and

said solvent is at least one selected from the group consisting of isopropanol, hexane, ethanol, acetone, toluene, hexadecane, dimethyl sulfoxide, and methyl ethyl ketone.

14. A process of producing a coating composition for forming a coating film having a lubricating surface for a liquid of interest, comprising:

mixing together particles, a binder resin for fixedly binding said particles together, a lubricating liquid that has a nonaffinity for said liquid but has an affinity for said binder, and a solvent having an affinity for said lubricating liquid, wherein said lubricating liquid has a contact angle of 0° upon dropwise addition onto a substrate made of the same material as said particles as measured in the atmosphere, and a contact angle of 0° upon dropwise addition onto the substrate made of the same material as said particles as measured in said liquid of interest,

a volume ratio of said solvent relative to a total amount of said solvent and said lubricating liquid ranges from 0.09 to 0.95 inclusive, and

a content of said binder resin relative to the total amount of said solvent and said lubricating liquid ranges from 0.0004 g/mL to 0.050 g/mL inclusive.

15. A process of forming a coating film having a lubricating surface for a liquid of interest, comprising:
applying the coating composition according to any one of claims 1 to 13 on an article.

16. The process according to claim 15 wherein application of said coating composition is carried out by at least one method selected from the group consisting of dip coating, flow coating, flow coating, curtain coating, spin coating, spray coating, airless spray coating, bar coating, roll coating, and brush coating.

17. The process according to claim 15 or 16, wherein said article has a surface composed of at least one material selected from the group consisting of a glass, a plastic, a rubber, a semiconductor, a metal, carbon, and a ceramic.

18. A lubricating article kit adapted to form a coating film having a lubricating surface for a liquid of interest, comprising:
the coating composition according to any one of claims 1 to 13, and an instruction manual associated with information for formation of a lubricating coating film on the article with use of said coating composition.

19. The lubricating article kid according to claim 18, wherein said instruction manual comprises applying said coating composition onto said article, and forming a coating film having a lubricating surface for the liquid of interest.

20. A washer liquid containing the coating composition according to any one of claims 1 to 13.

# FIG. 1

Liquid to be repelled

Usable as the solvent

# FIG. 2

Liquid to be repelled

Usable as the solvent

# FIG. 3

Legend:
- Liquid to be repelled
- Usable as the solvent

# FIG. 4

FIG. 5

510

FIG. 6

610

# FIG. 7

Underlayer (bottom)

Liquid film (surface)

50 µm

# FIG. 8

Not slide down

Water volume 5µL
Water volume 10µL

Water slide angle [° ]

60

30

0

| Lubricating liquid/Solvent mixture | + | + | + | + |
| Nanoparticles | + | + | − | − |
| Binder Resin | + | − | + | − |
| | Ex. 1 | Ex. 2 | Ex. 3 | Ex. 5 |

# FIG. 9

(A)

Air

+1 s

+7 s

(B)

Water

+1 s

+7 s

$\theta_{os(wat)} = 0$

# FIG. 10

| Ex. 10 | Ex. 11 |
|--------|--------|
| 200 µm | 200 µm |

Proportion of lubricating liquid
to the total liquid amount $\varphi_{lub}$

| 0.0476 | 0.0909 |

Exposure of underlayer

| Ex. 12 | Ex. 14 | Ex. 15 |
|--------|--------|--------|
| 200 µm | 200 µm | 200 µm |

Proportion of lubricating liquid
to the total liquid amount $\varphi_{lub}$

| 0.1667 | 0.3333 | 0.5 |

The surface is coated with lubricating liquid

## FIG. 11

The surface
where liquid rolls down

The surface
where liquid slides down

Proportion of lubricating liquid to the total liquid amount

# FIG. 12

# FIG. 13

# FIG. 14

# FIG. 15

Surface roughness of underlayer $S_q$ [μm²]

# FIG. 16

BET specific surface area [m²/g]

# FIG. 17

# FIG. 18

# FIG. 19

Liquids capable of repellency
1. Perfluoropolyether
2. Ethanol
3. Acetone
4. Oleic acid
5. Polyethylene glycol
6. Glycerol
7. Water

Liquids incapable of repellency
8. Isopropanol
9. n-Hexadecane
10. Toluene

Contact angle of lubricating oil in the liquid to be repelled

| Water | Acetone | Glycerol | Perfluoropolyether |
|---|---|---|---|
| +1 s ▼ | +1 s ▼ | +70 s ▼ | +10 s ▼ |
| +7 s ▼ | +86 s ▼ | +560 s ▼ | +680 s ▼ |
| $\theta_{os(wat)} = 0$ | $\theta_{os(ace)} = 0$ | $\theta_{os(gly)} = 0$ | $\theta_{os(fluoro)} = 0$ |

FIG. 20

States of slide of liquid of 5 µL in volume upon 10° inclination of the substrate

| Water | Acetone | Glycerol | Perfluoropolyether |
|---|---|---|---|

FIG. 21

# FIG. 22

Polycarbonate sheet

Silicone tube

Aluminum sheet

Stainless dispensing spoon

Glass sheet

Nitrile rubber sheet

# FIG. 23

Uncoated

Coated

Water droplet 0.2 mL
Inclination 30°

0    60    120    180

Liquid delivery speed [mm s$^{-1}$]

# FIG. 24

Spray coating        Uncoated     Coated

Water shower testing

After testing

After air-drying

No stain or smudge      Stain caused by volatilization of water droplets

# EP 4 474 434 A1

<table>
<tr><td colspan="2"><strong>INTERNATIONAL SEARCH REPORT</strong></td><td>International application No.<br><strong>PCT/JP2023/002857</strong></td></tr>
</table>

**A. CLASSIFICATION OF SUBJECT MATTER**

*C09D 5/00*(2006.01)i; *C11D 17/08*(2006.01)i; *C09D 183/04*(2006.01)i; *C09D 201/00*(2006.01)i; *C11D 7/20*(2006.01)i; *C11D 7/26*(2006.01)i; *C11D 7/50*(2006.01)i; *C09D 7/20*(2018.01)i; *C09D 7/61*(2018.01)i; *C09D 7/63*(2018.01)i
FI: C09D201/00; C09D5/00 Z; C09D7/20; C09D7/63; C09D7/61; C09D183/04; C11D7/20; C11D7/26; C11D7/50; C11D17/08

According to International Patent Classification (IPC) or to both national classification and IPC

**B. FIELDS SEARCHED**

Minimum documentation searched (classification system followed by classification symbols)

C09D5/00; C11D17/08; C09D183/04; C09D201/00; C11D7/20; C11D7/26; C11D7/50; C09D7/20; C09D7/61; C09D7/63

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-184536 A (SNT CO.) 22 November 2018 (2018-11-22)<br>entire text, all drawings | 1-20 |
| A | JP 2020-537034 A (UNIV. OF HOUSTON SYSTEM) 17 December 2020 (2020-12-17)<br>entire text, all drawings | 1-20 |
| A | JP 2019-014793 A (TOPPAN PRINTING CO., LTD.) 31 January 2019 (2019-01-31)<br>entire text, all drawings | 1-20 |
| A | JP 2004-204131 A (KAO CORP.) 22 July 2004 (2004-07-22)<br>entire text, all drawings | 1-20 |
| A | WO 2005/063903 A1 (SNT CO.) 14 July 2005 (2005-07-14)<br>entire text, all drawings | 1-20 |
| A | JP 2000-104047 A (SOFT 99 CORPORATION KK) 11 April 2000 (2000-04-11)<br>entire text, all drawings | 1-20 |

☐ Further documents are listed in the continuation of Box C.      ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/002857**

| Patent document cited in search report | | | Publication date (day/month/year) | Patent family member(s) | | | Publication date (day/month/year) |
|---|---|---|---|---|---|---|---|
| JP | 2018-184536 | A | 22 November 2018 | (Family: none) | | | |
| JP | 2020-537034 | A | 17 December 2020 | US | 2020/0347282 | A1 | |
| | | | | entire text, all drawings | | | |
| | | | | WO | 2019/079140 | A1 | |
| | | | | EP | 3697690 | A1 | |
| | | | | CN | 111406021 | A | |
| | | | | CA | 3078708 | A | |
| JP | 2019-014793 | A | 31 January 2019 | (Family: none) | | | |
| JP | 2004-204131 | A | 22 July 2004 | (Family: none) | | | |
| WO | 2005/063903 | A1 | 14 July 2005 | KR 10-2007-0015122 | | A | |
| | | | | entire text, all drawings | | | |
| | | | | JP | 2008-69365 | A | |
| JP | 2000-104047 | A | 11 April 2000 | (Family: none) | | | |

Form PCT/ISA/210 (patent family annex) (January 2015)

## REFERENCES CITED IN THE DESCRIPTION

**Patent documents cited in the description**

- JP 2004204131 A
- JP 2014509959 A
- JP 2014531989 A

**Non-patent literature cited in the description**

- **CHARLES M** ; **HANSEN**. Hansen Solubility Parameters; A Users Handbook. CRC Press, 2007